# EUROPEAN PATENT APPLICATION

(11) **EP 4 379 468 A1**
(43) Date of publication of application: **05.06.2024**
(21) Application number: 22849092.6
(22) Date of filing: 24.06.2022
(51) Int. Cl.: G03G 5/05, G03G 5/06, G03G 5/147, G03G 21/16

(54) **ELECTROPHOTOGRAPHIC PHOTORECEPTOR, PROCESS CARTRIDGE, AND IMAGE FORMING APPARATUS**

(30) Priority: 29.07.2021 JP 2021124646
(71) Applicant: KYOCERA Document Solutions Inc., Osaka-shi, Osaka, 540-8585 (JP)
(72) Inventor: OTSUBO Junichiro, Osaka-shi, Osaka 540-8585 (JP); TAKANO Katsuya, Osaka-shi, Osaka 540-8585 (JP); EZURE Kazuaki, Osaka-shi, Osaka 540-8585 (JP)
(74) Representative: Viering, Jentschura & Partner mbB Patent- und Rechtsanwälte
(86) International application number: PCT/JP2022/025328
(87) International publication number: WO 2023/008019

(57) **Abstract**

An electrophotographic photosensitive member includes at least one photosensitive layer on which a first photosensitive layer disposed on an outermost side thereof. The first photosensitive layer contains a charge generating material, a binder resin including a polyarylate resin with repeating units (1), (2), (3), and (4), an electron transport material, and a hole transport material. 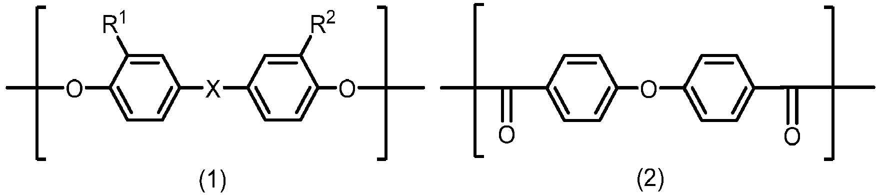 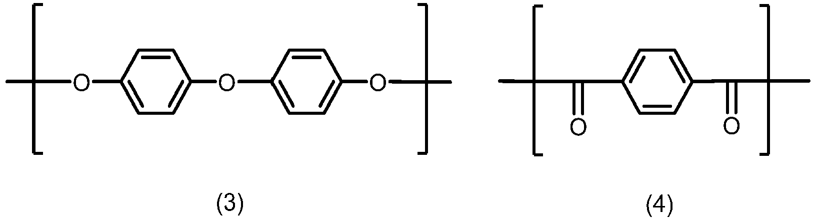 The electron transport material includes a compound represented by formula (10), (11), or (12). The hole transport material includes compounds represented by formulas (21) and (22): 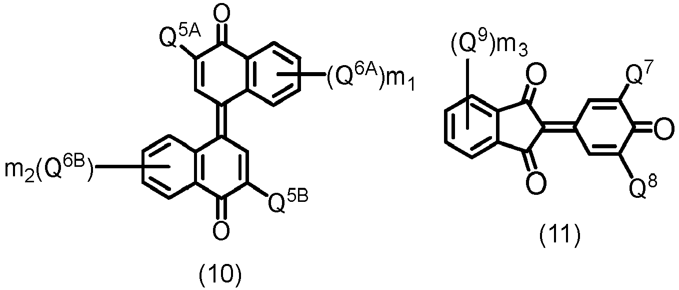 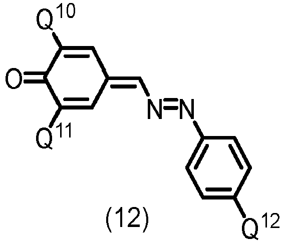 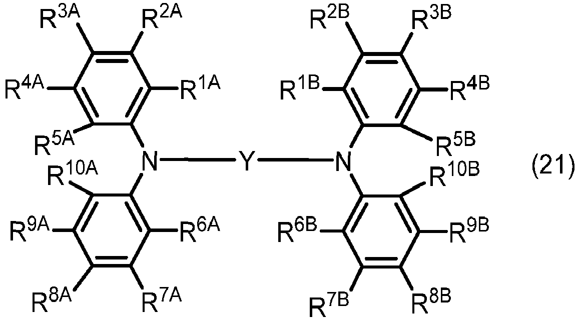 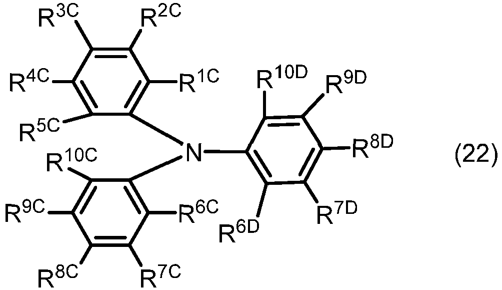 A percentage content of a number of repeats of the repeating unit (3) to the total number of repeats of the repeating units (1) and (3) is greater than 0% and less than 50%. A percentage content of a number of repeats of the repeating unit (4) to the total number of repeats of the repeating units (2) and (4) is at least 35% and less than 70%.

## Description

### TECHNICAL FIELD

The present invention relates to an electrophotographic photosensitive member, a process cartridge, and an image forming apparatus.

### BACKGROUND ART

An electrophotographic image forming apparatus (e.g., a printer or a multifunction peripheral) includes an electrophotographic photosensitive member as an image bearing member. The electrophotographic photosensitive member includes a photosensitive layer. Examples of the electrophotographic photosensitive member includes a single-layer electrophotographic photosensitive member and a multi-layer electrophotographic photosensitive member. The single-layer electrophotographic photosensitive member includes a single-layer photosensitive layer having a charge generating function and a charge transporting function. The multi-layer electrophotographic photosensitive member includes a photosensitive layer including a charge generating layer having a charge generating function and a charge transport layer having a charge transporting function.

An electrophotographic photosensitive member described in Patent Literature 1 includes a surface layer containing a polyarylate resin which is obtained from a divalent phenol component and a divalent carboxylic acid component represented by the following formula.

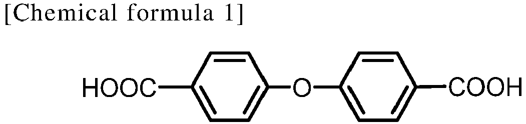

### CITATION LIST

### Patent Literature

Patent Literature 1
Japanese Patent Application Laid-Open Publication No. H10-20514

### SUMMARY OF INVENTION

### Technical Problem

The present inventors' studies have revealed that the electrophotographic photosensitive member disclosed in Patent Literature 1 is insufficient in favorable formation of a photosensitive layer by increasing binder resin solubility in a solvent. The present inventors' studies have also revealed that the electrophotographic photosensitive member disclosed in Patent Literature 1 is insufficient in sensitivity characteristics, crack resistance of the photosensitive layer, and inhibition of crystallization of the photosensitive layer.

The present invention has been made in view of the above problems and has its object of providing an electrophotographic photosensitive member including a favorably formed photosensitive layer in which crystallization of the photosensitive layer can be inhibited, and the photosensitive layer has excellent crack resistance and sensitivity characteristics. Another object of the present invention is to provide a process cartridge and an image forming apparatus that can inhibit image defects caused by crystallization and cracks in the photosensitive layer and can form high-quality images by virtue of excellent sensitivity characteristics.

### Solution to Problem

An electrophotographic photosensitive member according to the present invention includes a conductive substrate and at least one photosensitive layer. The at least one photosensitive layer includes a first photosensitive layer. The first photosensitive layer is disposed on an outermost side of the at least one photosensitive layer. The first photosensitive layer contains a charge generating material, a binder resin, an electron transport material, and a hole transport material. The binder resin includes a polyarylate resin. The polyarylate resin includes repeating units represented by formulas (1), (2), (3), and (4). A third percentage content is greater than 0% and less than 50%. The third percentage content is a percentage content of a number of repeats of the repeating unit represented by the formula (3) to a total of the number of repeats of the repeating unit represented by the formula (1) and the number of repeats of the repeating unit represented by the formula (3). A fourth percentage content is at least 35% and less than 70%. The fourth percentage content is a percentage content of a number of repeats of the repeating unit represented by the formula (4) to a total of the number of repeats of the repeating unit represented by the formula (2) and the number of repeats of the repeating unit represented by the formula (4). The electron transport material includes a compound represented by formula (10), (11), or (12). The hole transport material includes a first hole transport material and a second hole transport material. The first hole transport material contains a compound represented by formula (21). The second hole transport material contains a compound represented by formula (22).

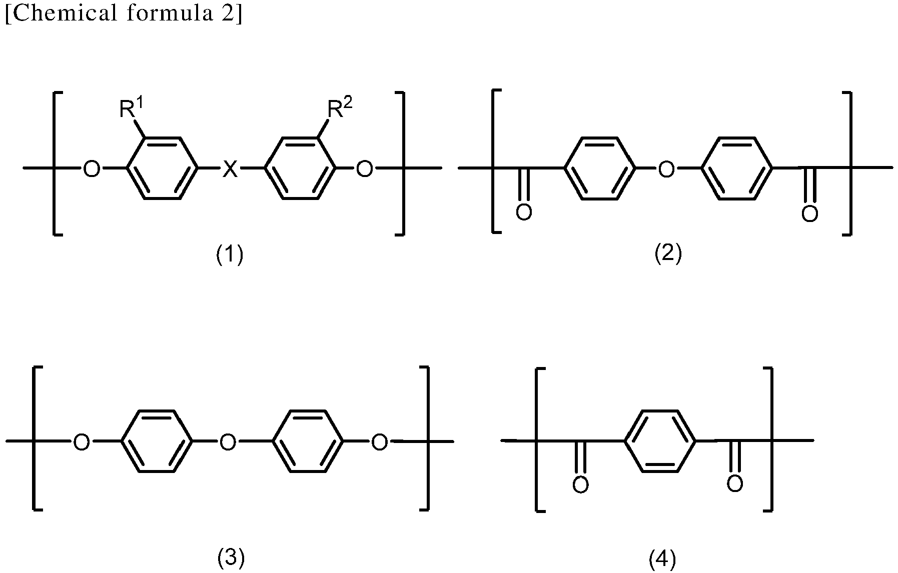

In the formula (1), R¹ and R² each represent a methyl group and X represents a divalent group represented by formula (X1). Alternatively, R¹ and R² each represent a hydrogen atom and X represents a divalent group represented by formula (X2).

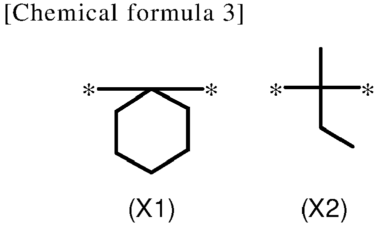

In the formulas (X1) and (X2), * represents a bond.

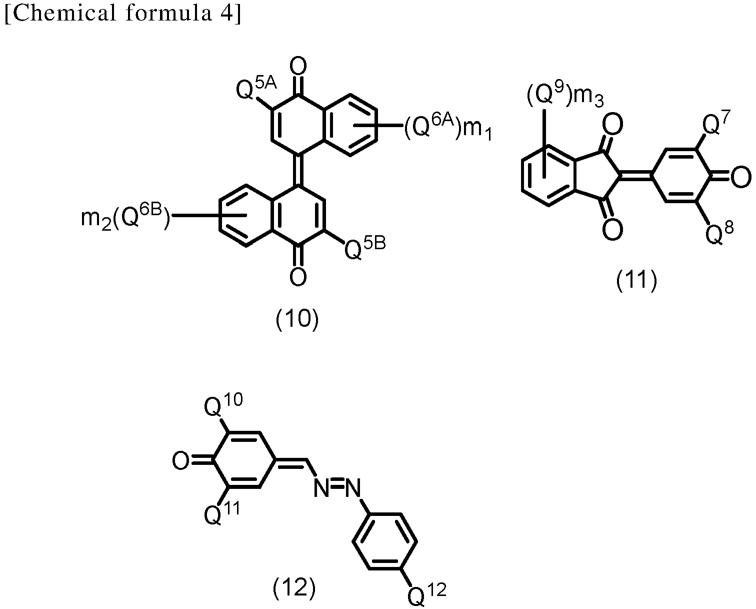

In the formula (10), Q^{5A} and Q^{5B} each represent, independently of one another, a hydrogen atom, a phenyl group, an alkyl group with a carbon number of at least 1 and no greater than 8, or an alkoxy group with a carbon number of at least 1 and no greater than 8. Q^{6A} and Q^{6B} each represent, independently of one another, a phenyl group, an alkyl group with a carbon number of at least 1 and no greater than 8, or an alkoxy group with a carbon number of at least 1 and no greater than 8. m₁ and m₂ each represent, independently of one another, an integer of at least 0 and no greater than 4. In the formula (11), Q⁷ and Q⁸ each represent, independently of one another, a hydrogen atom, a phenyl group, an alkyl group with a carbon number of at least 1 and no greater than 8, or an alkoxy group with a carbon number of at least 1 and no greater than 8. Q⁹ represents a phenyl group, an alkyl group with a carbon number of at least 1 and no greater than 8, or an alkoxy group with a carbon number of at least 1 and no greater than 8. m₃ represents an integer of at least 0 and no greater than 4. In the formula (12), Q¹⁰ and Q¹¹ each represent, independently of one another, a hydrogen atom or an alkyl group with a carbon number of at least 1 and no greater than 6. Q¹² represents a halogen atom or a hydrogen atom.

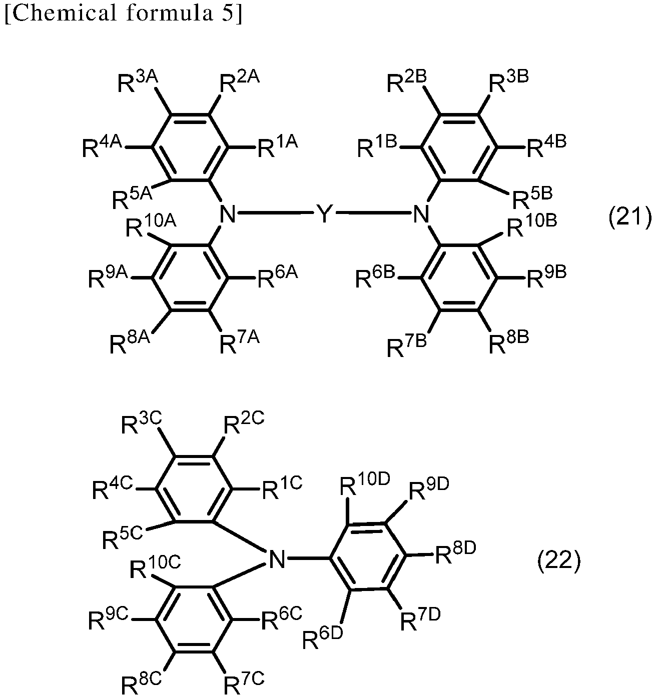

In the formula (21), R^{1A} , R^{2A} , R^{3A} , R^{4A} , R^{5A}, R^{6A}, R^{7A} , R^{8A} , R^{9A} , and R^{10A} each represent, independently of one another, a hydrogen atom, an alkyl group with a carbon number of at least 1 and no greater than 8, an alkoxy group with a carbon number of at least 1 and no greater than 8, or an aryl group with a carbon number of at least 6 and no greater than 14. R^{1B} in the formula (21) and R^{1C} in the formula (22) represent a same group as R^{1A} in the formula (21). R^{2B} in the formula (21) and R^{2C} in the formula (22) represent a same group as R^{2A} in the formula (21). R^{3B} in the formula (21) and R^{3C} in the formula (22) represent a same group as R^{3A} in the formula (21). R^{4B} in the formula (21) and R^{4C} in the formula (22) represent a same group as R^{4A} in the formula (21). R^{5B} in the formula (21) and R^{5C} in the formula (22) represent a same group as R^{5A} in the formula (21). R^{6B} in the formula (21) and R^{6C} and R^{6D} in the formula (22) represent a same group as R^{6A} in the formula (21). R^{7B} in the formula (21) and R^{7C} and R^{7D} in the formula (22) represent a same group as R^{7A} in the formula (21). R^{8B} in the formula (21) and R^{8C} and R^{8D} in the formula (22) represent a same group as R^{8A} in the formula (21). R^{9B} in the formula (21) and R^{9C} and R^{9D} in the formula (22) represent a same group as R^{9A} in the formula (21). R^{10B} in the formula (21) and R^{10C} and R^{10D} in the formula (22) represent a same group as R^{10A} in the formula (21). Y in the formula (21) represents a divalent group represented by formula (Y2).

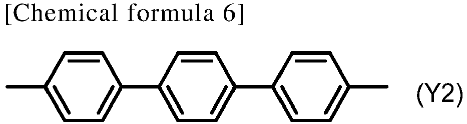

The process cartridge of the present invention includes the electrophotographic photosensitive member described above, and at least one selected from the group consisting of a charger, a light exposure device, a development device, and a transfer device.

An image forming apparatus according to the present invention includes an image bearing member, a charger that charges a surface of the image bearing member to a positive polarity, a light exposure device that exposes the charged surface of the image bearing member to light to form an electrostatic latent image on the surface of the image bearing member, a development device that develops the electrostatic latent image into a toner image by supplying toner to the surface of the image bearing member, and a transfer device that transfers the toner image from the image bearing member to a transfer target. The image bearing member is the electrophotographic photosensitive member described above.

### Advantageous Effects of Invention

In the electrophotographic photosensitive member of the present invention, the photosensitive layer is favorably formed, crystallization of the photosensitive layer can be inhibited, and the photosensitive layer exhibits excellent crack resistance and sensitivity characteristics. The process cartridge and image forming apparatus of the present invention can inhibit image defects caused by crystallization and cracks in the photosensitive layer and can form high-quality images by virtue of excellent sensitivity characteristics.

### BRIEF DESCRIPTION OF THE DRAWINGS

[FIG. 1]

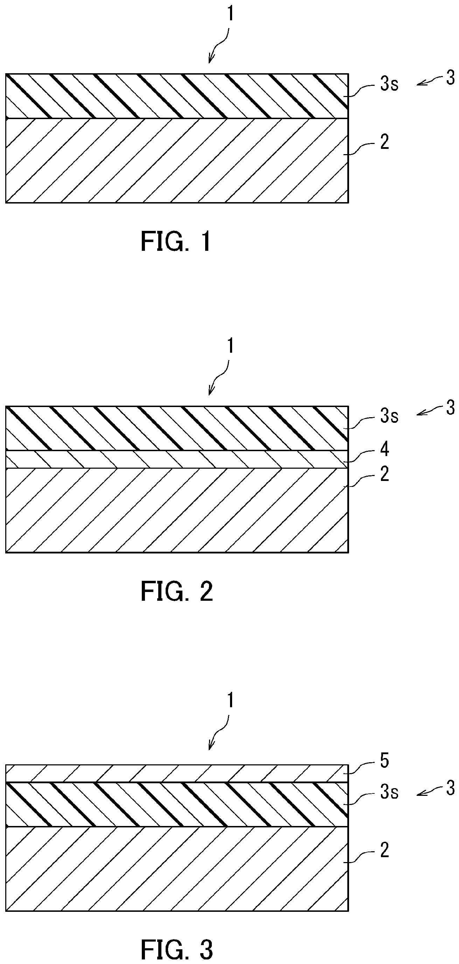

   FIG. 1 is a partial cross-sectional view of a single-layer electrophotographic photosensitive member that is an example of an electrophotographic photosensitive member according to a first embodiment of the present invention.
[FIG. 2]
   FIG. 2 is a partial cross-sectional view of a single-layer electrophotographic photosensitive member that is another example of the electrophotographic photosensitive member according to the first embodiment of the present invention.
[FIG. 3]
   FIG. 3 is a partial cross-sectional view of a single-layer electrophotographic photosensitive member that is still another example of the electrophotographic photosensitive member according to the first embodiment of the present invention.
[FIG. 4]

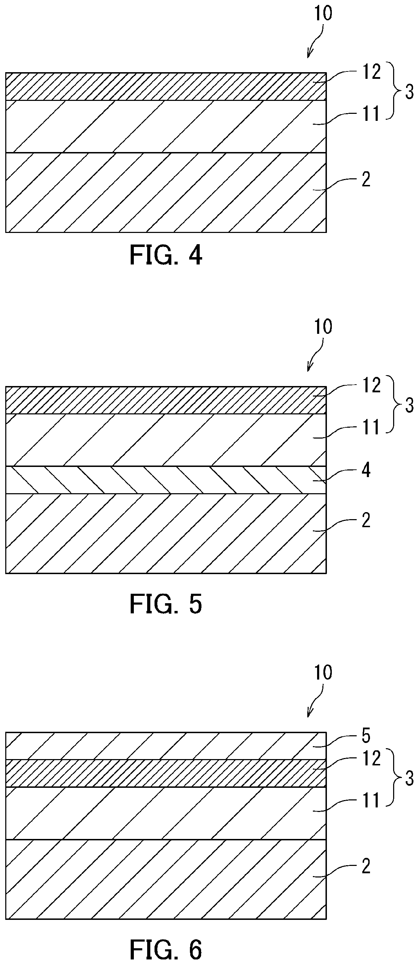

   FIG. 4 is a partial cross-sectional view of a positively chargeable multi-layer electrophotographic photosensitive member that is an example of the electrophotographic photosensitive member according to the first embodiment of the present invention.
[FIG. 5]
   FIG. 5 is a partial cross-sectional view of a positively chargeable multi-layer electrophotographic photosensitive member that is another example of the electrophotographic photosensitive member according to the first embodiment of the present invention.
[FIG. 6]
   FIG. 6 is a partial cross-sectional view of a positively chargeable multi-layer electrophotographic photosensitive member that is still another example of the electrophotographic photosensitive member according to the first embodiment of the present invention.
[FIG. 7]

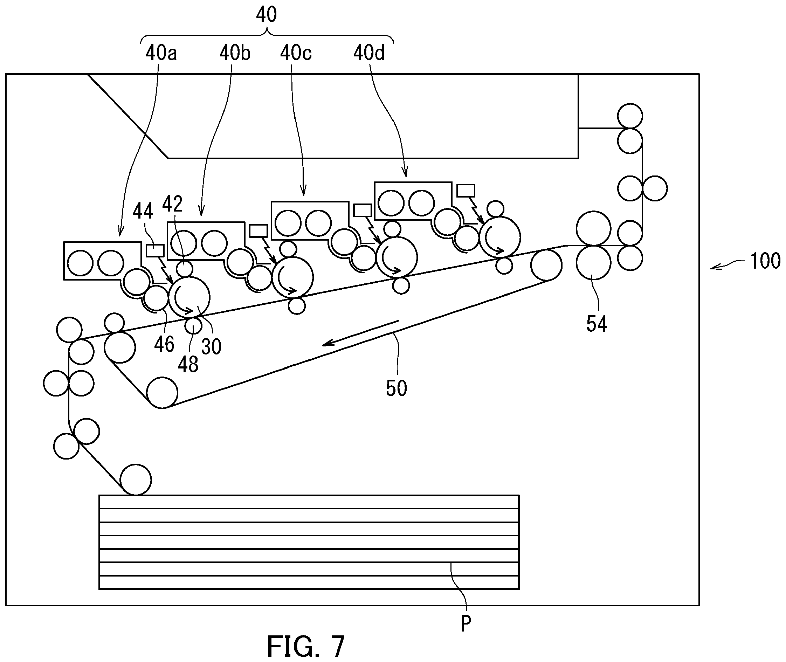

   FIG. 7 is a diagram illustrating an example of an image forming apparatus according to a second embodiment of the present invention.
[FIG. 8]

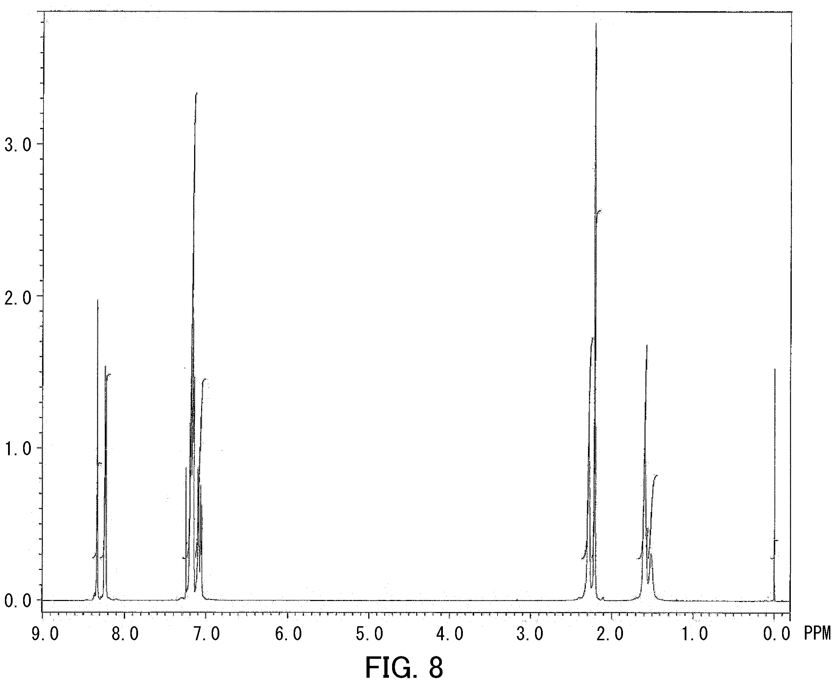

   FIG. 8 is a ¹H-NMR spectrum of a polyarylate resin (R-1).

### DESCRIPTION OF EMBODIMENTS

The following describes embodiments of the present invention in detail. However, the present invention is not limited to the following embodiments and can be practiced within a scope of objects of the present invention with alterations made as appropriate. In the following description, the term "-based" may be appended to the name of a chemical compound to form a generic name encompassing both the chemical compound itself and derivatives thereof. When the term "-based" is appended to the name of a chemical compound used in the name of a polymer, the term indicates that a repeating unit of the polymer originates from the chemical compound or a derivative thereof. Furthermore, "general formulas" and "chemical formulas" are each generally referred to as "formula". The words "each represent, independently of one another" in description of formulas mean representing the same group as or different groups from one another. Any one type of each component described in the present specification may be used independently or any two or more types of the component may be used in combination unless otherwise stated.

The substituents used in the present specification will be described first. Examples of a halogen atom (halogen group) include a fluorine atom (fluoro group), a chlorine atom (chloro group), a bromine atom (bromo group), and an iodine atom (iodine group).

Unless otherwise stated, an alkyl group with a carbon number of at least 1 and no greater than 8, an alkyl group with a carbon number of at least 1 and no greater than 6, and an alkyl group with a carbon number of at least 1 and no greater than 3 each are an unsubstituted straight chain or branched chain alkyl group. Examples of the alkyl group with a carbon number of at least 1 and no greater than 8 include a methyl group, an ethyl group, an n-propyl group, an isopropyl group, an n-butyl group, a sec-butyl group, a tert-butyl group, an n-pentyl group, a 1-methylbutyl group, a 2-methylbutyl group, a 3-methylbutyl group, a 1-ethylpropyl group, a 2-ethylpropyl group, a 1,1-dimethylpropyl group, a 1,2-dimethylpropyl group, a 2,2-dimethylpropyl group, an n-hexyl group, a 1-methylpentyl group, a 2-methylpentyl group, a 3-methylpentyl group, a 4-methylpentyl group, a 1,1-dimethylbutyl group, a 1,2-dimethylbutyl group, a 1,3-dimethylbutyl group, a 2,2-dimethylbutyl group, a 2,3-dimethylbutyl group, a 3,3-dimethylbutyl group, a 1,1,2-trimethylpropyl group, a 1,2,2-trimethypropyl group, a 1-ethylbutyl group, a 2-ethylbutyl group, a 3-ethylbutyl group, a straight chain or branched chain heptyl group, and a straight chain or branched chain octyl group. Examples of the alkyl group with a carbon number of at least 1 and no greater than 6, and the alkyl group with a carbon number of at least 1 and no greater than 3 are groups with corresponding carbon numbers among the groups listed as the examples of the alkyl group with a carbon number of at least 1 and no greater than 8.

A perfluoroalkyl group with a carbon number of at least 1 and no greater than 10, a perfluoroalkyl group with a carbon number of at least 3 and no greater than 10, a perfluoroalkyl group with a carbon number of at least 5 and no greater than 7, and a perfluoroalkyl group with a carbon number of 6 each are an unsubstituted straight chain or branched chain perfluoroalkyl group unless otherwise stated. Examples of the perfluoroalkyl group with a carbon number of at least 1 and no greater than 10 include a trifluoromethyl group, a perfluoroethyl group, a perfluoro-n-propyl group, a perfluoroisopropyl group, a perfluoro-n-butyl group, a perfluoro-sec-butyl group, a perfluoro-tert-butyl group, a perfluoro-n-pentyl group, a perfluoro-1-methylbutyl group, a perfluoro-2-methylbutyl group, a perfluoro-3-methylbutyl group, a perfluoro-1-ethylpropyl group, a perfluoro-2-ethylpropyl group, a perfluoro-1,1-dimethylpropyl group, a perfluoro-1,2-dimethylpropyl group, a perfluoro-2,2-dimethylpropyl group, a perfluoro-n-hexyl group, a perfluoro-1-methylpentyl group, a perfluoro-2-methylpentyl group, a perfluoro-3-methylpentyl group, a perfluoro-4-methylpentyl group, a perfluoro-1,1-dimethylbutyl group, a perfluoro-1,2-dimethylbutyl group, a perfluoro-1,3-dimethylbutyl group, a perfluoro-2,2-dimethylbutyl group, a perfluoro-2,3-dimethylbutyl group, a perfluoro-3,3-dimethylbutyl group, a perfluoro-1,1,2-trimethylpropyl group, a perfluoro-1,2,2-trimethylpropyl group, a perfluoro-1-ethylbutyl group, a perfluoro-2-ethylbutyl group, a perfluoro-3-ethylbutyl group, a straight chain or branched chain perfluoroheptyl group, a straight chain or branched chain perfluorooctyl group, a straight chain or branched chain perfluorononyl group, and a straight chain or branched chain perfluorodecyl group. Examples of the perfluoroalkyl group with a carbon number of at least 3 and no greater than 10, the perfluoroalkyl group with a carbon number of at least 5 and no greater than 7, and the perfluoroalkyl group with a carbon number of 6 are groups with corresponding carbon numbers among the groups listed as the examples of the perfluoroalkyl group with a carbon number of at least 1 and no greater than 10.

An alkanediyl group with a carbon number of at least 1 and no greater than 6 and an alkanediyl group with a carbon number of at least 1 and no greater than 3 each are an unsubstituted straight chain or branched chain alkanediyl group unless otherwise stated. Examples of the alkanediyl group with a carbon number of at least 1 and no greater than 6 include a methanediyl group (methylene group), an ethanediyl group, an n-propanediyl group, an isopropanediyl group, an n-butanediyl group, a sec-butanediyl group, a tert-butanediyl group, an n-pentanediyl group, a 1-methylbutanediyl group, a 2-methylbutanediyl group, a 3-methylbutanediyl group, a 1-ethylpropanediyl group, a 2-ethylpropanediyl group, a 1,1-dimethylpropanediyl group, a 1,2-dimethylpropanediyl group, a 2,2-dimethylpropanediyl group, an n-hexanediyl group, a 1-methylpentanediyl group, a 2-methylpentanediyl group, a 3-methylpentanediyl group, a 4-methylpentanediyl group, a 1,1-dimethylbutanediyl group, a 1,2-dimethylbutanediyl group, a 1,3-dimethylbutanediyl group, a 2,2-dimethylbutanediyl group, a 2,3-dimethylbutanediyl group, a 3,3-dimethylbutanediyl group, a 1,1,2-trimethylpropanediyl group, a 1,2,2-trimethylpropanediyl group, a 1-ethylbutanediyl group, a 2-ethylbutanediyl group, and a 3-ethylbutandiyl group. Examples of the alkanediyl group with a carbon number of at least 1 and no greater than 3 are groups with a corresponding carbon number among the groups listed as the examples of the alkanediyl group with a carbon number of at least 1 and no greater than 6.

An alkoxy group with a carbon number of at least 1 and no greater than 8, an alkoxy group with a carbon number of at least 1 and no greater than 6, and an alkoxy group with a carbon number of at least 1 and no greater than 3, each are an unsubstituted straight chain or branched chain alkoxy group unless otherwise stated. Examples of the alkoxy group with a carbon number of at least 1 and no greater than 8 include a methoxy group, an ethoxy group, an n-propoxy group, an isopropoxy group, an n-butoxy group, a sec-butoxy group, a tert-butoxy group, an n-pentoxy group, a 1-methylbutoxy group, a 2-methylbutoxy group, a 3-methylbutoxy group, a 1-ethylpropoxy group, a 2-ethylpropoxy group, a 1,1-dimethylpropoxy group, a 1,2-dimethylpropoxy group, a 2,2-dimethylpropoxy group, an n-hexyloxy group, a 1-methylpentyloxy group, a 2-methylpentyloxy group, a 3-methylpentyloxy group, a 4-methylpentyloxy group, a 1,1-dimethylbutoxy group, a 1,2-dimethylbutoxy group, a 1,3-dimethylbutoxy group, a 2,2-dimethylbutoxy group, a 2,3-dimethylbutoxy group, a 3,3-dimethylbutoxy group, a 1,1,2-trimethylpropoxy group, a 1,2,2-trimethylpropoxy group, a 1-ethylbutoxy group, a 2-ethylbutoxy group, a 3-ethylbutoxy group, a straight chain or branched chain heptyloxy group, and a straight chain or branched chain octyloxy group. Examples of the alkoxy group with a carbon number of at least 1 and no greater than 6 and the alkoxy group with a carbon number of at least 1 and no greater than 3 are groups with corresponding carbon numbers among the groups listed as the examples of the alkoxy group with a carbon number of at least 1 and no greater than 8.

An aryl group with a carbon number of at least 6 and no greater than 14 and an aryl group with a carbon number of at least 6 and no greater than 10 each are an unsubstituted aryl group unless otherwise stated. Examples of the aryl group with a carbon number of at least 6 and no greater than 14 include a phenyl group, a naphthyl group, an indacenyl group, a biphenylenyl group, an acenaphthylenyl group, an anthryl group, and a phenanthryl group. Examples of the aryl group with a carbon number of at least 6 and no greater than 10 include a phenyl group and a naphthyl group. The substituents used in the present specification have been described so far.

### <First Embodiment: Electrophotographic Photosensitive Member>

A first embodiment of the present invention relates to an electrophotographic photosensitive member (also referred to below as a photosensitive member). The photosensitive member of the first embodiment includes a conductive substrate and at least one photosensitive layer. The at least one photosensitive layer includes a first photosensitive layer. The first photosensitive layer is disposed on the outermost side of the at least one photosensitive layer. The outermost side refers to the outer surface side (e.g., a surface side on which exposure light enters) of the photosensitive member, which is opposite to the side where a conductive substrate of the photosensitive member is located.

The photosensitive member of the first embodiment is a single-layer electrophotographic photosensitive member (also referred to below as single-layer photosensitive member) or a positively chargeable multi-layer electrophotographic photosensitive member (also referred to below as positively chargeable multi-layer photosensitive member).

### (Single-layer Photosensitive Member)

The following describes a single-layer photosensitive member 1, which is an example of the photosensitive member of the first embodiment, with reference to FIGS. 1 to 3. FIGS. 1 to 3 each are a partial cross-sectional view of the single-layer photosensitive member 1.

As illustrated in FIG. 1, the single-layer photosensitive member 1 includes a conductive substrate 2 and a photosensitive layer 3, for example. The photosensitive layer 3 included in the single-layer photosensitive member 1 is a single layer (one layer). The photosensitive layer 3 of one layer is a single-layer photosensitive layer 3s, serving as the first photosensitive layer.

As illustrated in FIG. 2, the single-layer photosensitive member 1 may further include an intermediate layer 4 (undercoat layer) in addition to the conductive substrate 2 and the single-layer photosensitive layer 3s. The intermediate layer 4 is disposed between the conductive substrate 2 and the single-layer photosensitive layer 3s. As illustrated in FIG. 1, the single-layer photosensitive layer 3s may be disposed directly on the conductive substrate 2. Alternatively, as illustrated in FIG. 2, the single-layer photosensitive layer 3s may be disposed on the conductive substrate 2 with the intermediate layer 4 therebetween.

As illustrated in FIG. 3, the single-layer photosensitive member 1 may further include a protective layer 5 in addition to the conductive substrate 2 and the single-layer photosensitive layer 3s. The protective layer 5 is disposed on the single-layer photosensitive layer 3s. The single-layer photosensitive layer 3s is preferably provided as an outermost layer of the photosensitive member 1 as illustrated in FIGS. 1 and 2. Crack resistance of the single-layer photosensitive layer 3s can be easily enhanced by providing the single-layer photosensitive layer 3s as the outermost layer. The single-layer photosensitive layer 3s herein contains a polyarylate resin (PA) and a specific electron transport material described later. Note that the protective layer 5 may be provided as an outermost layer of the photosensitive member 1 as illustrated in FIG. 3.

Although no particular limitations are placed on the thickness of the single-layer photosensitive layer 3s, the single-layer photosensitive layer 3s has a thickness of preferably at least 5 µm and no greater than 100 µm, and more preferably at least 10 µm and no greater than 50 µm.

The single-layer photosensitive layer 3s being the first photosensitive layer contains a charge generating material, a binder resin, an electron transport material, and a hole transport material. In the following, the "hole transport material contained in the single-layer photosensitive layer 3s" may also be referred to as "hole transport material (SL)". The "binder resin contained in the single-layer photosensitive layer 3s" may also be referred to as "binder resin (SL)". The single-layer photosensitive layer 3s may contain an additive as necessary. The single-layer photosensitive member 1 has been described so far with reference to FIGS. 1 to 3.

### (Positively Chargeable Multi-layer Photosensitive Member)

The following describes a positively chargeable multi-layer photosensitive member 10, which is an example of the photosensitive member of the first embodiment, with reference to FIGS. 4 to 6. FIGS. 4 to 6 each are a partial cross-sectional view of the positively chargeable multi-layer photosensitive member 10.

As illustrated in FIG. 4, the positively chargeable multi-layer photosensitive member 10 includes a conductive substrate 2 and a photosensitive layer 3, for example. The photosensitive layer 3 included in the positively chargeable multi-layer photosensitive member 10 includes two layers: a charge generating layer 12 and a charge transport layer 11. The charge generating layer 12 is the first photosensitive layer. The charge transport layer 11 is a second photosensitive layer. The charge generating layer 12 being the first photosensitive layer is disposed on the outermost side of the photosensitive layer 3 of two layers (the charge generating layer 12 and the charge transport layer 11). The charge transport layer 11 is disposed on the side of the conductive substrate 2 rather than the charge generating layer 12. Because the charge generating layer 12 is located on the outermost side (an opposite side to the side where the conductive substrate 2 of the positively chargeable multi-layer photosensitive member 10 is disposed), the charge transport layer 11 is disposed on the conductive substrate 2 and the charge generating layer 12 is disposed on the charge transport layer 11, for example. In a case in which an image forming apparatus 100 (see FIG. 7) is provided with the positively chargeable multi-layer photosensitive member 10, the positively chargeable multi-layer photosensitive member 10 is charged to a positive polarity by a charger 42 (see FIG. 7).

As illustrated in FIG. 5, the positively chargeable multi-layer photosensitive member 10 may further include an intermediate layer 4 (undercoat layer) in addition to the conductive substrate 2 and the photosensitive layer 3. The intermediate layer 4 is disposed between the conductive substrate 2 and the photosensitive layer 3 (e.g., the charge transport layer 11). As illustrated in FIG. 4, the photosensitive layer 3 (e.g., the charge transport layer 11) may be disposed directly on the conductive substrate 2. Alternatively, as illustrated in FIG. 5, the photosensitive layer 3 (e.g., the charge transport layer 11) may be disposed on the conductive substrate 2 with the intermediate layer 4 therebetween.

As illustrated in FIG. 6, the positively chargeable multi-layer photosensitive member 10 may further include a protective layer 5 in addition to the conductive substrate 2 and the photosensitive layer 3. The protective layer 5 is provided on the photosensitive layer 3 (e.g., charge generating layer 12). As illustrated in FIGS. 4 and 5, the photosensitive layer 3 is preferably provided as an outermost layer of the positively chargeable multi-layer photosensitive member 10. Crack resistance of the photosensitive layer 3 (e.g., charge generation layer 12) can be easily improved by providing the photosensitive layer 3 (e.g., the charge generating layer 12) as the outermost layer. The single-layer photosensitive layer 3s (e.g., the charge generating layer 12) herein contains the polyarylate resin (PA) and the specific electron transport material described later. Note that the protective layer 5 may be provided as an outermost layer of the positively chargeable multi-layer photosensitive member 10 as illustrated in FIG. 6.

The charge generating layer 12 has a thickness of preferably at least 2 µm and no greater than 100 µm, and more preferably at least 15µm and no greater than 30 µm. The charge transport layer 11 preferably has a thickness of at least 2 µm and no greater than 100 µm, more preferably at least 3 µm and no greater than 20 µm, and further preferably at least 5 µm and no greater than 15 µm.

The charge generating layer 12 being the first photosensitive layer contains a charge generating material, a binder resin, an electron transport material, and a hole transport material. In the following, the "hole transport material contained in the charge generating layer 12" may also be referred to as "hole transport material (CG)". The "binder resin contained in the charge generating layer 12" may also be referred to as "binder resin (CG)". The charge generating layer 12 may contain an additive as necessary.

The charge transport layer 11 being the second photosensitive layer contains a hole transport material and a binder resin. In the following, the "hole transport material contained in the charge transport layer 11" may also be referred to as "hole transport material (CT)". The "binder resin contained in the charge transport layer 11" may also be referred to as "binder resin (CT)". The charge transport layer 11 may contain an additive as necessary. The positively chargeable multi-layer photosensitive member 10 has been described so far with reference to FIGS. 4 to 6.

The photosensitive member will be described further in detail below. Note that where there is no need to distinguish among the binder resin (SL), the binder resin (CG), and the binder resin (CT), they may be each referred to simply as "binder resin". Where there is no need to distinguish among the hole transport material (SL), the hole transport material (CG), and the hole transport material (CT), they may be each referred to simply as "hole transport material".

### (Hole Transport Material)

The hole transport materials (SL) and (CG) contained in the first photosensitive layer each include a first hole transport material and a second hole transport material. The first hole transport material contains a compound represented by formula (21). The second hole transport material contains a compound represented by formula (22). In the following, the compounds represented by formulas (21) and (22) may be referred to as hole transport materials (21) and (22), respectively.

Note that the hole transport material (CT) contained in the second photosensitive layer is not particularly limited. The hole transport material (CT) may include either or both the first hole transport material and the second hole transport material. Furthermore, the hole transport material (CT) may be another hole transport material described later. The hole transport materials (CG) and (CT) may be the same or different from each other.

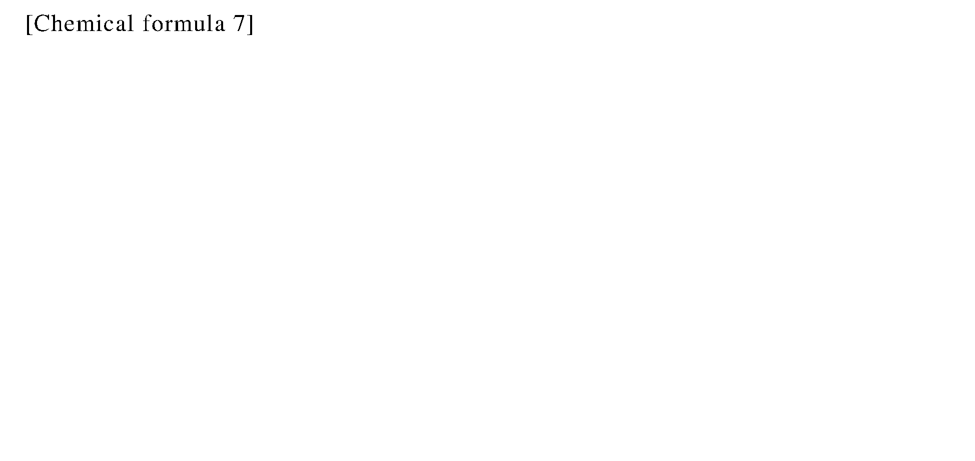

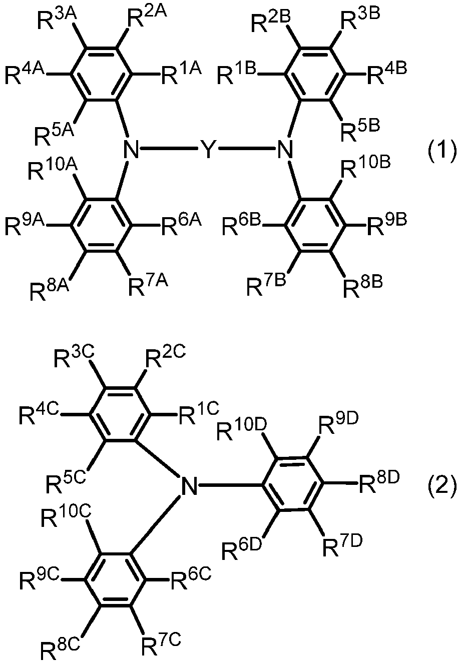

In formula (21), R^{1A} , R^{2A} , R^{3A} , R^{4A} , R^{5A}, R^{6A}, R^{7A} , R^{8A} , R^{9A} , and R^{10A} each represent, independently of one another, a hydrogen atom, an alkyl group with a carbon number of at least 1 and no greater than 8, an alkoxy group with a carbon number of at least 1 and no greater than 8, or an aryl group with a carbon number of at least 6 and no greater than 14. R^{1B} in formula (21) and R^{1C} in formula (22) represent the same group as R^{1A} in formula (21). R^{2B} in formula (21) and R^{2C} in formula (22) represent the same group as R^{2A} in formula (21). R^{3B} in formula (21) and R^{3C} in formula (22) represent the same group as R^{3A} in formula (21). R^{4B} in formula (21) and R^{4C} in formula (22) represent the same group as R^{4A} in formula (21). R^{5B} in formula (21) and R^{5C} in formula (22) represent the same group as R^{5A} in formula (21). R^{6B} in formula (21) and R^{6C} and R^{6D} in formula (22) represent the same group as R^{6A} in formula (21). R^{7B} in formula (21) and R^{7C} and R^{7D} in formula (22) represent the same group as R^{7A} in formula (21). R^{8B} in formula (21) and R^{8C} and R^{8D} in formula (22) represent the same group as R^{8A} in formula (21). R^{9B} in formula (21) and R^{9C} and R^{9D} in formula (22) represent the same group as R^{9A} in formula (21). R^{10B} in formula (21) and R^{10C} and R^{10D} in formula (22) represent the same group as R^{10A} in formula (21). Y in formula (21) represents a divalent group represented by formula (Y2).

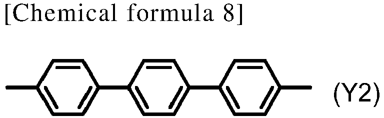

As a result of the photosensitive layer (especially, the first photosensitive layer) containing both the hole transport materials (21) and (22), crack resistance of the photosensitive member (especially, the single-layer photosensitive member and the positively chargeable multiple-layer photosensitive member) can be improved and crystallization of the photosensitive layer can be inhibited. Crack resistance of the photosensitive member is a property that can inhibit occurrence of cracks in the photosensitive member layer even if a cleaning agent remains on the surface of the photosensitive member in maintenance. Here, the hole transport material (22) is a by-product produced when synthesizing the hole transport material (21) being the final product. The final product is usually obtained by removing the by-products through purification. However, the present inventors have been found that crack resistance of the photosensitive member can be improved by intentionally leaving the hole transport material (22) mixed with the hole transport material (21) without completely removing the by-product hole transport material (22) through purification. The present inventors also found that hole transport material (22) inhibits aggregation of the hole transport material (21), thereby inhibiting the crystallization of the photosensitive layer. Furthermore, the photosensitive member of the first embodiment includes a photosensitive layer containing the hole transport material (21) which is excellent in sensitivity characteristics. Therefore, in addition to inhibition of crystallization of the photosensitive layer and improvement in crack resistance, improvement in sensitivity characteristics of the photosensitive member can also be achieved.

The alkyl group with a carbon number of at least 1 and no greater than 8 represented by R^{1A}, R^{2A}, R^{3A}, R^{4A}, R^{5A}, R^{6A}, R^{7A}, R^{8A}, R^{9A}, or R^{10A} in formula (21) is preferably an alkyl group with a carbon number of at least 1 and no greater than 6, more preferably an alkyl group with a carbon number of at least 1 and no greater than 3, and further preferably a methyl group or an ethyl group.

The alkoxy group with a carbon number of at least 1 and no greater than 8 represented by R^{1A}, R^{2A}, R^{3A}, R^{4A}, R^{5A}, R^{6A}, R^{7A}, R^{8A}, R^{9A}, or R^{10A} in formula (21) is preferably an alkoxy group with a carbon number of at least 1 and no greater than 6, more preferably an alkoxy group with a carbon number of at least 1 and no greater than 3, and further preferably a methoxy group.

The aryl group with a carbon number of at least 6 and no greater than 14 represented by R^{1A}, R^{2A}, R^{3A}, R^{4A}, R^{5A}, R^{6A}, R^{7A}, R^{8A}, R^{9A}, or R^{10A} in formula (21) is preferably an aryl group with a carbon number of at least 6 and no greater than 10.

To improve crack resistance of the photosensitive member and inhibit crystallization, it is preferable in formula (21) that at least two of R^{1A}, R^{2A}, R^{3A}, R^{4A}, R^{5A}, R^{6A}, R^{7A}, R^{8A}, R^{9A}, and R^{10A} represent a group other than a hydrogen atom while the rest of R^{1A}, R^{2A}, R^{3A}, R^{4A}, R^{5A}, R^{6A},R^{7A}, R^{8A}, R^{9A}, and R^{10A} represents a hydrogen atom. Furthermore, the total number of the carbon atoms of the groups other than the hydrogen atoms is preferably at least 3. Note that the groups other than the hydrogen atoms represented by R^{1A}, R^{2A}, R^{3A}, R^{4A}, R^{5A}, R^{6A}, R^{7A}, R^{8A}, R^{9A}, or R^{10A} in formula (21) each are an alkyl group with a carbon number of at least 1 and no greater than 8, an alkoxy group with a carbon number of at least 1 and no greater than 8, or an aryl group with a carbon number of at least 6 and no greater than 14.

To improve crack resistance of the photosensitive member and inhibit crystallization, R^{3A} in formula (21) preferably represents an alkoxy group with a carbon number of at least 1 and no greater than 8.

To improve crack resistance of the photosensitive member and inhibit crystallization, it is preferable in formula (21) that one or two of R^{1A}, R^{3A}, and R^{5A} each represent an alkyl group with a carbon number of at least 1 and no greater than 8 or an alkoxy group with a carbon number of at least 1 and no greater than 8 while the remaining R^{1A}, R^{3A}, and R^{5A} as well as R^{2A} and R^{4A} each represent a hydrogen atom.

To improve crack resistance of the photosensitive member and inhibit crystallization, it is preferable in formula (21) that R^{8A} represents a hydrogen atom or an alkyl group with a carbon number of at least 1 and no greater than 8 and R^{6A}, R^{7A}, R^{9A}, and R^{10A} each represent a hydrogen atom.

To improve the sensitivity characteristics and crack resistance of the photosensitive member and inhibit crystallization, it is preferable that the hole transport material (21) is a compound represented by formula (HTM-1) and the hole transport material (22) is a compound represented by formula (HTM-A). For the same purpose as above, it is preferable that the hole transport material (21) is a compound represented by formula (HTM-2) and the hole transport material (22) is a compound represented by formula (HTM-B). For the same purpose as above, it is preferable that the hole transport material (21) is a compound represented by formula (HTM-3) and the hole transport material (22) is a compound represented by formula (HTM-C). For the same purpose as above, it is preferable that the hole transport material (21) is a compound represented by formula (HTM-4) and the hole transport material (22) is a compound represented by formula (HTM-D). In the following, the compounds represented by formulas (HTM-1) to (HTM-4) may be referred to as hole transport materials (HTM-1) to (HTM-4), respectively. Furthermore, the compounds represented by formulas (HTM-A) to (HTM-D) may be referred to as hole transport materials (HTM-A) to (HTM-D), respectively.

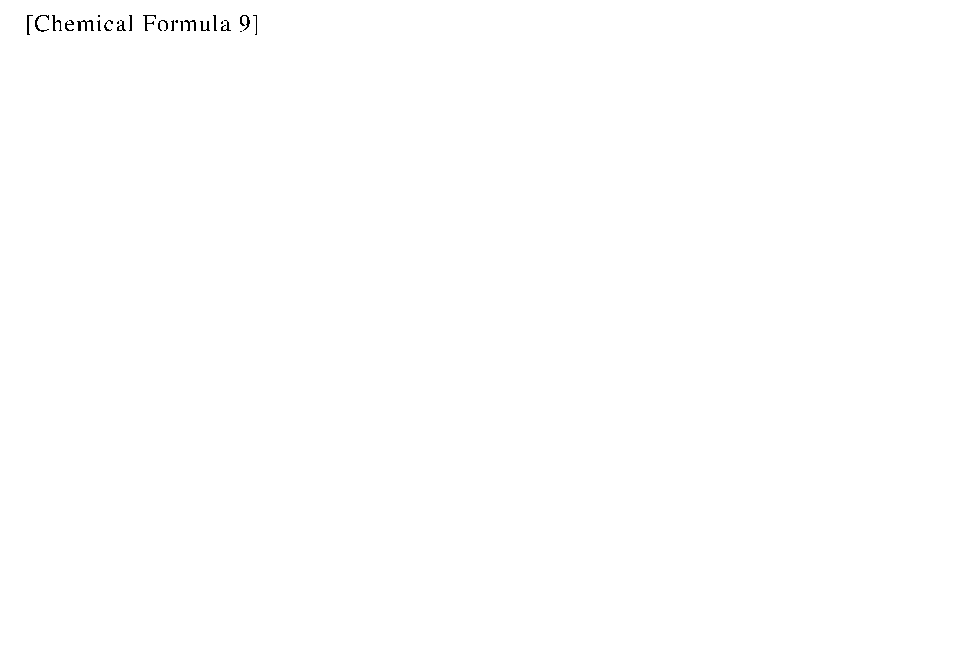

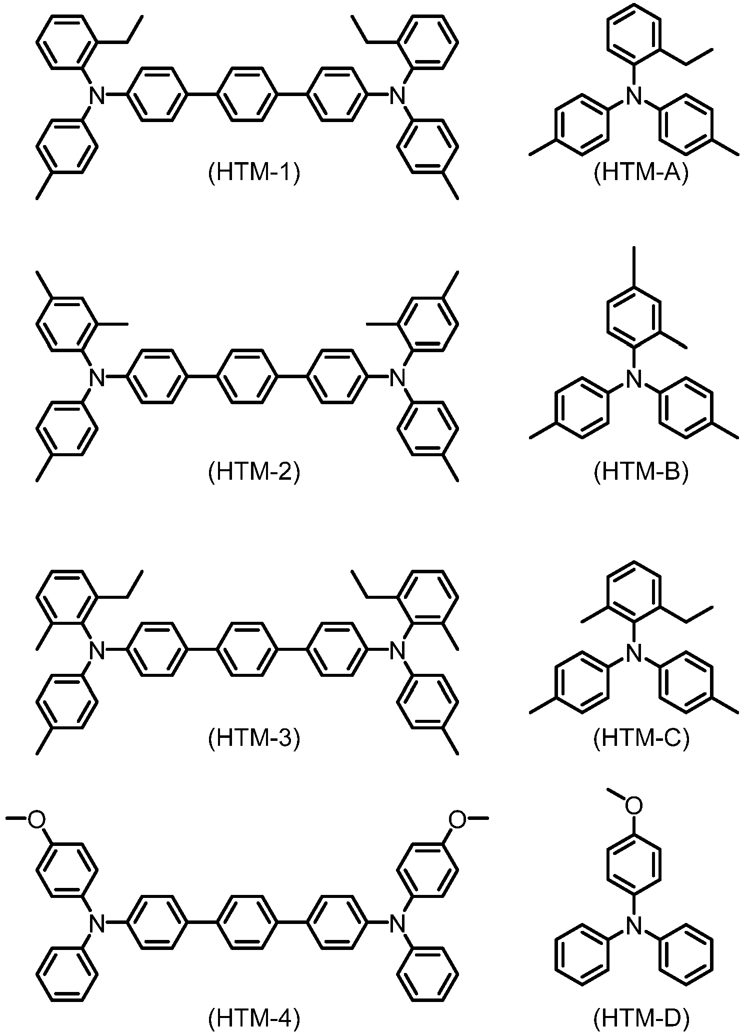

The percentage content of the hole transport material (22) to the total mass of the hole transport materials (21) and (22) is preferably at least 1.0% by mass and no greater than 30.0% by mass, more preferably at least 1.0% by mass and no greater than 10.0% by mass, and further preferably at least 2.0% by mass and no greater than 5.0% by mass. As a result of the percentage content of the hole transport material (22) being set to at least 1.0% by mass to the total mass of the hole transport materials (21) and (22), crack resistance of the photosensitive member can be further improved, and crystallization of the photosensitive member can be further inhibited. As a result of the percentage content of the hole transport material (22) being set to no greater than 30.0% by mass to the total mass of the hole transport materials (21) and (22), sensitivity characteristics of the photosensitive member can be improved. A method for adjusting the percentage content of the hole transport material (22) to the total mass of the hole transport materials (21) and (22) will be described in "Hole Transport Material Production Method" below.

The content of the hole transport material (SL) (i.e., the total content of the hole transport materials (21) and (22)) relative to 100 parts by mass of the binder resin (SL) is preferably at least 10 parts by mass and no greater than 200 parts by mass, more preferably at least 50 parts by mass and no greater than 150 parts by mass, and further preferably at least 60 parts by mass and no greater than 100 parts by mass. The content of the hole transport material (CG) (i.e., the total content of hole transport materials (21) and (22)) relative to 100 parts by mass of the binder resin (CG) is preferably at least 10 parts by mass and no greater than 200 parts by mass, more preferably at least 50 parts by mass and no greater than 150 parts by mass, and further preferably at least 60 parts by mass and no greater than 100 parts by mass. The content of the hole transport material (CT) (i.e., the total content of the hole transport materials (21) and (22)) relative to 100 parts by mass of the binder resin (CT) is preferably at least 10 parts by mass and no greater than 200 parts by mass, more preferably at least 50 parts by mass and no greater than 150 parts by mass, and further preferably at least 70 parts by mass and no greater than 130 parts by mass.

The first photosensitive layer may contain only the hole transport materials (21) and (22) as the hole transport material. Alternatively, in addition to the hole transport materials (21) and (22), the first photosensitive layer may further contain other hole transport materials other than these (also referred to below as additional hole transport materials). Examples of the additional hole transport materials include triphenylamine derivatives, diamine derivatives (e.g., an N,N,N',N'-tetraphenylbenzidine derivative, an N,N,N',N'-tetraphenylphenylenediamine derivative, anN,N,N',N'-tetraphenylnaphthylenediamine derivative, an N,N,N',N'-tetraphenylphenantolylenediamine derivative, and a di(aminophenylethenyl)benzene derivatives), oxadiazole-based compounds (e.g., 2,5-di(4-methylaminophenyl)-1,3,4-oxadiazole), styryl-based compounds (e.g., 9-(4-diethylaminostyryl)anthracene), carbazole-base compounds (e.g., polyvinylcarbazole), organic polysilane compounds, pyrazoline-based compounds (e.g., 1-phenyl-3-(p-dimethylaminophenyl)pyrazoline), hydrazone-based compounds, indole-based compounds, oxazole-based compounds, isoxazole-based compounds, thiazole-based compounds, thiadiazole-based compounds, imidazole-based compounds, pyrazole-based compounds, and triazole-based compounds.

### (Hole Transport Material Production Method)

The following describes an example of a hole transport material production method. The hole transport material production method includes a first stirring step and a second stirring step. In the first stirring step, a mixed liquid (also referred to below simply as "liquid"), which contains a compound represented by formula (A) and a compound represented by formula (B), is subjected to a first round of stirring. In the second stirring step, a compound represented by formula (C) is further added to the liquid obtained in the first stirring step and the resulting liquid is subjected to a second round of stirring. The second stirring step is carried out without purifying the liquid after the first stirring step. Through the first stirring step and the second stirring step, a hole transport material (i.e., a mixture of the hole transport materials (21) and (22)) containing both the first hole transport material and the second hole transport material is obtained. The resulting mixture of the hole transport materials (21) and (22) is used as a hole transport material in a photosensitive layer formation process. In the following, the compounds represented by formulas (A), (B), and (C) may be referred to as compounds (A), (B), and (C), respectively.

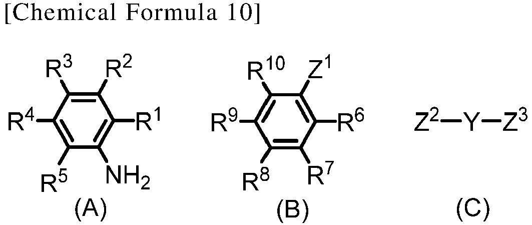

R¹, R², R³, R⁴, and R⁵ in formula (A) represent the same groups as R^{1A}, R^{2A}, R^{3A}, R^{4A}, and R^{5A} in formula (21), respectively. R⁶, R⁷, R⁸, R⁹, and R¹⁰ in formula (B) represent the same groups as R^{6A}, R^{7A}, R^{8A}, R^{9A}, and R^{10A} in formula (21), respectively. Z¹ in formula (B) represents a halogen atom. Y in formula (C) represents the same group as Y in formula (21). Z² and Z³ in formula (C) each represent a halogen atom.

As shown in the reaction formula (r-1) below, the reaction of 1 molar equivalent of the compound (A) and 2 molar equivalents of the compound (B) yields 1 molar equivalent of the hole transport material (22). In the first stirring step, the reaction represented by reaction formula (r-1) proceeds. Note that the reaction represented by reaction formula (r-1) may proceed both in the first stirring step and the second stirring step.

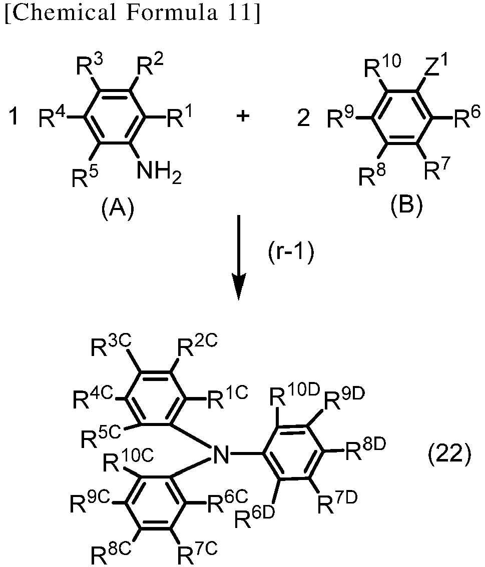

Furthermore, as shown in reaction formulas (r-2) and (r-3) below, the reaction of 2 molar equivalents of the compound (A), 2 molar equivalents of the compound (B), and 1 molar equivalent of the compound (C) yields 1 molar equivalent of the hole transport material (21). Specifically, as shown in reaction formula (r-2), the reaction of 2 molar equivalents of the compound (A) and 2 molar equivalents of the compound (B) yields 2 molar equivalents of a compound represented by formula (D) (also referred to below as compound (D)). The compound (D) is an intermediate product. Subsequently, as shown in reaction formula (r-3), the reaction of 2 molar equivalents of the compound (D) and 1 molar equivalent of the compound (C) yields 1 molar equivalent of the hole transport material (21). The reaction represented by reaction formula (r-2) proceeds in the first stirring step, and the reaction represented by reaction formula (r-3) proceeds in the second stirring step. Note that the reaction represented by reaction formula (r-2) may proceed both in the first stirring step and the second stirring step.

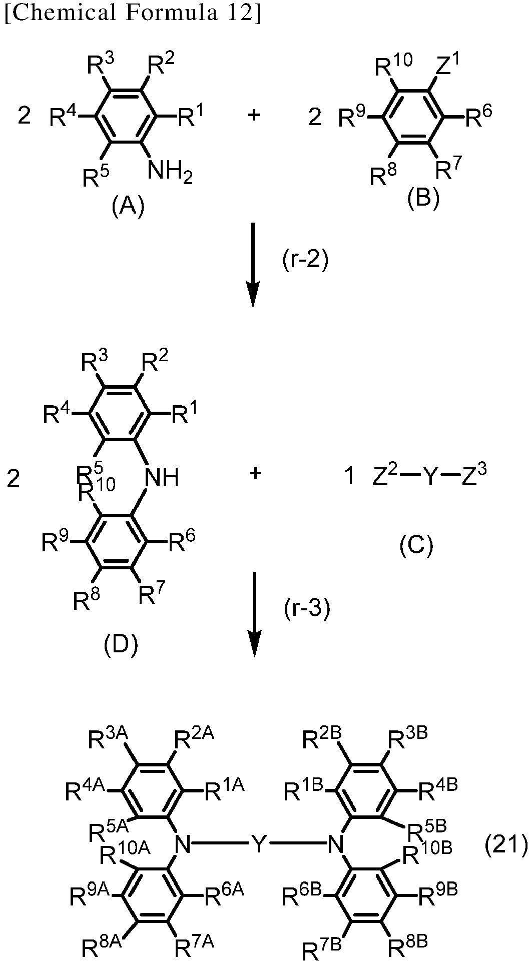

Because the raw materials of the hole transport materials (21) and (22), such as the compound (A) are common to each other, R¹ in formula (A) is the same group as R^{1A} and R^{1B} in formula (21) and R^{1C} in formula (22). R² to R⁵ in formula (A) are the same groups as the corresponding substituents in formulas (21) and (22), as is R¹. Because the raw materials of the hole transport materials (21) and (22), such as the compound (B) are common to each other, R⁶ in formula (B) represents the same group as R^{6A} and R^{6B} in formula (21) and R^{6C} and R^{6D} in formula (22). R⁷ to R¹⁰ in formula (B) are the same groups as the corresponding substituents in formulas (21) and (22), as is R⁶.

A palladium catalyst may be added to the liquid stirred in the first round in the first stirring step and the liquid stirred in the second round in the second stirring step. Examples of the palladium catalyst include palladium (II) acetate, palladium (II) chloride, sodium hexachloropalladate (IV) tetrahydrate, and tris(dibenzylideneacetone)dipalladium (0).

A ligand may be added to the liquid stirred in the first round in the first stirring step and the liquid stirred in the second round in the second stirring step. Examples of the ligand include 2-dicyclohexylphosphine-2',4',6'-triisopropylbiphenyl, (4-dimethylaminophenyl)di-tert-butyl phosphine, tricyclohexylphosphine, triphenylphosphine, and methyl diphenylphosphine.

A base may be added to the liquid stirred in the first round in the first stirring step and the liquid stirred in the second round in the second stirring step. Examples of the base include sodium tert-butoxide, tripotassium phosphate, and cesium fluoride.

A solvent may be added to the liquid stirred in the first round in the first stirring step and the liquid stirred in the second round in the second stirring step. Examples of the solvent include xylene, toluene, tetrahydrofuran, and dimethylformamide.

The temperature of the liquid stirred in the first round in the first stirring step and the liquid stirred in the second round in the second stirring step is preferably at least 80°C and no greater than 140°C. The time for the first stirring is preferably at least 1 hour and no greater than 10 hours, and more preferably at least 5 hours and no greater than 10 hours. The time for the second stirring is preferably at least 1 hour and no greater than 10 hours, and more preferably at least 1 hour and no greater than 4 hours. The stirring in the first and second rounds may be carried out in an inert gas (e.g., nitrogen gas or argon gas atmosphere).

In a hole transport material production process, the liquid is not purified after the first stirring step. Therefore, the hole transport material production process can be simplified. Furthermore, through the first stirring step and the second stirring step, the hole transport materials (21) and (22) are obtained simultaneously in the form of a mixture. Being obtained as a mixture allows for skipping the separate weighing and mixing of each of the hole transport material (21) ands (22) in preparation of an application liquid in the photosensitive layer formation process.

In the hole transport material production process, the hole transport material (22) remains in the hole transport material obtained in the second stirring step. By intentionally leaving the hole transport material (22) as a by-product without completely removing it, the photosensitive layer contains both the hole transport materials (21) and (22). Therefore, crack resistance of the photosensitive member can be improved, and crystallization of the photosensitive member can be inhibited. Note that purification may be carried out after the second stirring step, ensuring that the hole transport material (22) is not entirely removed. Furthermore, purification may be carried out after the second stirring step, ensuring that the hole transport material (21) is not entirely removed. Examples of the purification method after the second stirring step include activated clay treatment, recrystallization, and a combination thereof.

The percentage content of the hole transport material (22) to the total mass of the hole transport materials (21) and (22) can be adjusted, for example, by changing a ratio (B/A) of the mass of the compound (B) added to the mass of the compound (A) added. The ratio (B/A) is a molar ratio conversion value. A higher ratio (B/A) indicates a higher percentage content of the hole transport material (22) to the total mass of the hole transport materials (21) and (22). The ratio (B/A) is preferably at least 1.05 and no greater than 1.45, and more preferably at least 1.05 and no greater than 1.25.

Furthermore, the percentage content of the hole transport material (22) to the total mass of the hole transport materials (21) and (22) can be adjusted, for example, by changing a ratio (A/C) of the mass of the compound (A) added to the mass of the compound (C) added. The ratio (A/C) is a molar ratio conversion value. A higher ratio (A/C) indicates a higher percentage content of the hole transport material (22) to the total mass of the hole transport materials (21) and (22). The ratio (A/C) is preferably at least 2.30 and no greater than 3.30, and more preferably at least 2.30 and no greater than 2.60.

In addition, the percentage content of the hole transport material (22) to the total mass of the hole transport materials (21) and (22) can be adjusted, for example, by carrying out purification after the second stirring step without completely removing the hole transport material (22) and changing conditions for the purification. Note that adjustment of the percentage content of the hole transport material (22) to the total mass of the hole transport materials (21) and (22) may be achieved by further adding either or both the hole transport materials (21) and (22) to the hole transport material obtained through the first stirring step and the second stirring step.

### (Binder Resin)

The binder resins (SL) and (CG) contained in the first photosensitive layer each include a polyarylate resin. The polyarylate resin includes repeating units represented by formulas (1), (2), (3), and (4). A third percentage content is greater than 0% and less than 50% in the polyarylate resin. The third percentage content is a percentage content of the number of repeats of the repeating unit represented by formula (3) to the total of the number of repeats of the repeating unit represented by formula (1) and the number of repeats of the repeating unit represented by formula (3). A fourth percentage content is at least 35% and less than 70% in the polyarylate resin. The fourth percentage content is a percentage content of the number of repeats of the repeating unit represented by formula (4) relative to the total of the number of repeats of the repeating unit represented by formula (2) and the number of repeats of the repeating unit represented by formula (4).

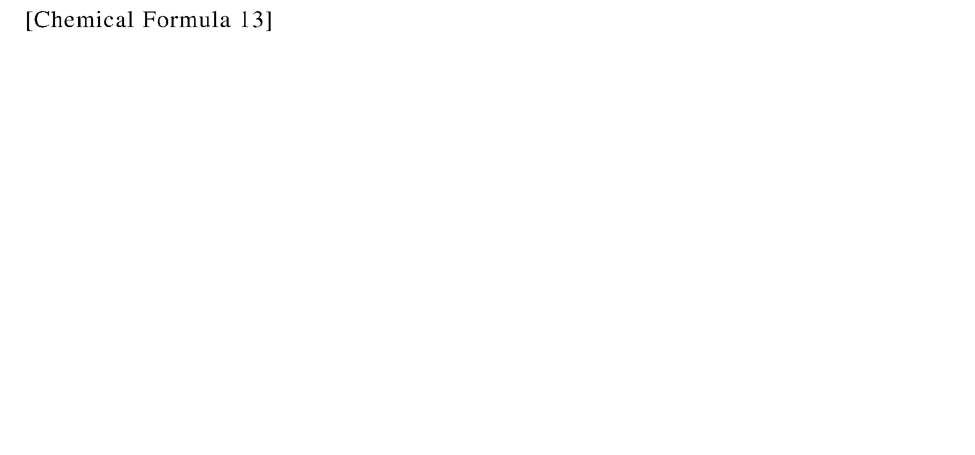

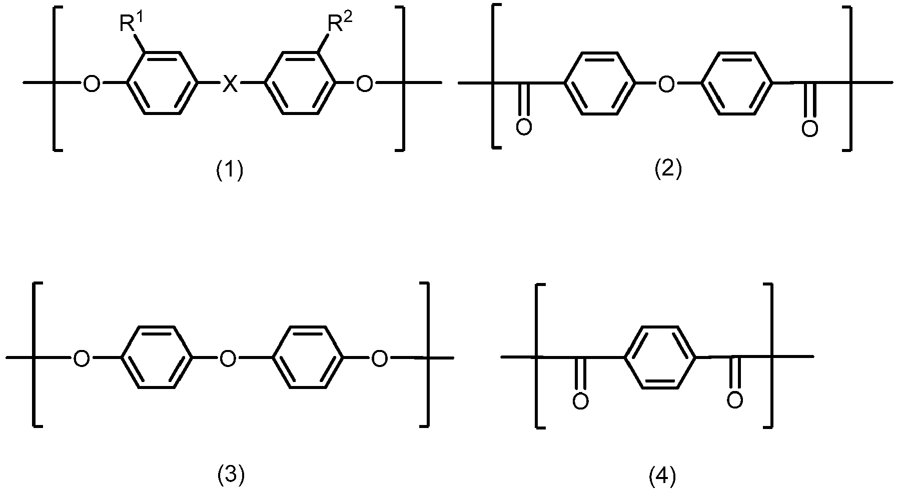

In formula (1), R¹ and R² each represent a methyl group and X represents a divalent group represented by formula (X1). Alternatively, R¹ and R² each represent a hydrogen atom and X represents a divalent group represented by formula (X2).

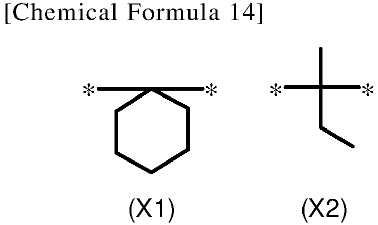

In formulas (X1) and (X2), * represents a bond. Each bond that is represented by * in formulas (X1) and (X2) is bonded to a carbon atom to which X in formula (1) is bonded.

In the following, the repeating units represented by formulas (1), (2), (3), and (4) may be referred to as "repeating units (1), (2), (3), and (4)", respectively. Also, the polyarylate resin including the repeating units (1), (2), (3), and (4) and having a third percentage content of greater than 0% and less than 50% and a fourth percentage content of at least 35% and less than 70% may be referred to as "polyarylate resin (PA)".

Note that the binder resin (CL) contained in the second photosensitive layer is not particularly limited and may include the polyarylate resin (PA) or an additional binder resin which will be described later. Furthermore, the binder resin (CG) and the binder resin (CT) may be the same as or different from each other.

As a result of the photosensitive layer (especially, the first photosensitive layer) containing the polyarylate resin (PA) in addition to the first hole transport material, the second hole transport material, and the specific electron transport material, crack resistance of the photosensitive layer can be particularly improved. Furthermore, the polyarylate resin (PA) has excellent solubility in a solvent, thereby achieving favorable formation of the photosensitive layer (especially, the first photosensitive layer).

When R¹ and R² each represent a methyl group and X represents a divalent group represented by formula (X1) in formula (1), the repeating unit (1) is a repeating unit represented by formula (1-1) (also referred to below as repeating unit (1-1)). When R¹ and R² each represent a hydrogen atom and X represents a divalent group represented by formula (X2) in formula (1), the repeating unit (1) is a repeating unit represented by formula (1-2) (also referred to below as repeating unit (1-2)). The polyarylate resin (PA) may include only one repeating unit (1) or include two repeating units (1).

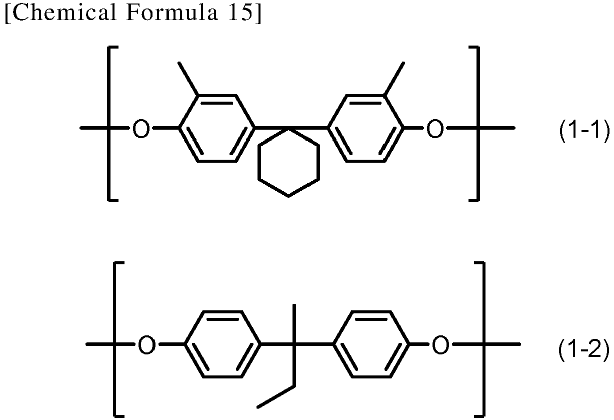

A percentage content of the number of repeats of the repeating unit (1) to the total number of repeats of the repeating units (1) and (3) is also referred to below as first percentage content. The first percentage content corresponds to a percentage content (i.e., 100 × M₁/(M₁ + M₃)) of a number M₁ of repeats of the repeating unit (1) relative to the total of the number M₁ of repeats of the repeating unit (1) and a number M₃ of repeats of the repeating unit (3) in the polyarylate resin (PA). Note that in a case in which the polyarylate resin (PA) contains two types of repeating units (1), the number M₁ of repeats of the repeating unit (1) is the total number of repeats of the two types of repeating units (1).

The first percentage content is preferably less than 100%, more preferably no greater than 99%, further preferably no greater than 90%, further more preferably no greater than 80%, still further preferably no greater than 70%, still more preferably less than 70%, and particularly preferably no greater than 65%. By contrast, the first percentage content is preferably greater than 50%, more preferably at least 51%, and further preferably at least 55%. The first percentage content is preferably greater than 50% and no greater than 70%, and more preferably greater than 50% and less than 70%.

A percentage content of the number of repeats of the repeating unit (2) to the total number of repeats of the repeating units (2) and (4) is also referred to below as second percentage content. The second percentage content corresponds to a percentage content (i.e., 100 × M₂/(M₂ + M₄)) of a number M₂ of repeats of the repeating unit (2) relative to the total of the number M₂ of repeats of the repeating unit (2) and a number M₄ of repeats of the repeating unit (4) in the polyarylate resin (PA).

The second percentage content is preferably no greater than 65%, and more preferably no greater than 60%. By contrast, the second percentage content is preferably greater than 30%, more preferably at least 31%, further preferably at least 35%, still further preferably at least 40%, and particularly preferably at least 55%. The second percentage content is preferably greater than 30% and no greater than 60%. Alternatively, the second percentage content is preferably at least 55% and no greater than 65%.

As described previously, the third percentage content is greater than 0% and less than 50%. The third percentage content corresponds to a percentage content (i.e., 100 × M₃/(M₁ + M₃)) of a number M₃ of repeats of the repeating unit (3) to the total of a number M₁ of repeats of the repeating unit (1) and the number M₃ of repeats of the repeating unit (3) in the polyarylate resin (PA).

As a result of the third percentage content being less than 50%, the polyarylate resin (PA) can have increased solubility in a solvent to achieve favorable formation of the photosensitive layer. As a result of the third percentage content being greater than 0%, that is, as a result of the third percentage content being not 0%, abrasion resistance of the photosensitive member where the polyarylate resin (PA) is contained in the photosensitive layer can be improved. The third percentage content is preferably at least 1%, more preferably at least 10%, further preferably at least 20%, further more preferably at least 30%, still more preferably greater than 30%, and particularly preferably at least 35%. By contrast, the third percentage content is preferably no greater than 49%, and more preferably no greater than 45%.

To inhibit crystallization of the photosensitive layer and improve crack resistance and sensitivity characteristics of the photosensitive layer, the third percentage content is preferably at least 30% and less than 50%, and more preferably greater than 30% and less than 50%.

As described previously, the fourth percentage content is at least 35% and less than 70%. The fourth percentage content corresponds to a percentage content (i.e., 100 × M₄/(M₂ + M₄)) of the number M₄ of repeats of the repeating unit (4) relative to the total of the number M₂ of repeats of the repeating unit (2) and the number M₄ of repeats of the repeating unit (4) in the polyarylate resin (PA).

To favorably form the photosensitive layer, inhibit crystallization of the photosensitive layer, and improve crack resistance and sensitivity characteristics of the photosensitive layer, the fourth percentage content is at least 35% and less than 70%. Preferably, the fourth percentage content is at least 40%. Furthermore, the fourth percentage content is preferably no greater than 69%, more preferably no greater than 65%, further preferably no greater than 60%, and still further preferably no greater than 45%.

To inhibit crystallization of the photosensitive layer and improve crack resistance and sensitivity characteristics of the photosensitive layer, the fourth percentage content is preferably at least 40% and less than 70%. For the same purpose as above, the fourth percentage content is also preferably at least 35% and no greater than 45%.

The first percentage content, the second percentage content, the third percentage content, and the fourth percentage content can be each calculated from a ratio of a peak unique to a corresponding repeating unit in a ¹H-NMR spectrum of the polyarylate resin (PA) measured using a proton nuclear magnetic resonance spectrometer.

To favorably form the photosensitive layer, inhibit crystallization of the photosensitive layer, and improve crack resistance and sensitivity characteristics of the photosensitive layer, it is preferable that the value of the first percentage content differs from that of the second percentage content and that of the fourth percentage. For the same purpose as above, it is preferable that the value of the third percentage content differs from that of the second percentage and that of the fourth percentage content.

To favorably form the photosensitive layer, inhibit crystallization of the photosensitive layer, and improve crack resistance and sensitivity characteristics of the photosensitive layer, it is preferable that: R¹ and R² each represent a methyl group and X represents a divalent group represented by formula (X1) in formula (1); and the fourth percentage content is at least 40% and less than 70%.

To favorably form the photosensitive layer, inhibit crystallization of the photosensitive layer, and improve crack resistance and sensitivity characteristics of the photosensitive layer, it is preferable that: R¹ and R² each represent a methyl group and X represents a divalent group represented by formula (X1) in formula (1); and the third percentage content is at least 30% and less than 50%.

To favorably form the photosensitive layer, inhibit crystallization of the photosensitive layer, and improve crack resistance and sensitivity characteristics of the photosensitive layer, it is preferable that: R¹ and R² each represent a hydrogen atom and X represents a divalent group represented by formula (X2) in formula (1); and the fourth percentage content is at least 35% and no greater than 45%.

The polyarylate resin (PA) may not include a repeating unit with a biphenyl structure. An example of the repeating unit with a biphenyl structure is a repeating unit represented by formula (5). Examples of the repeating unit represented by formula (5) include repeating units represented by formulas (5-1) and (5-2).

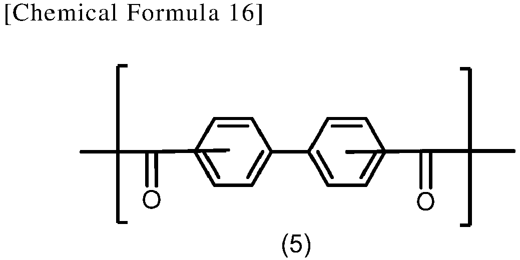

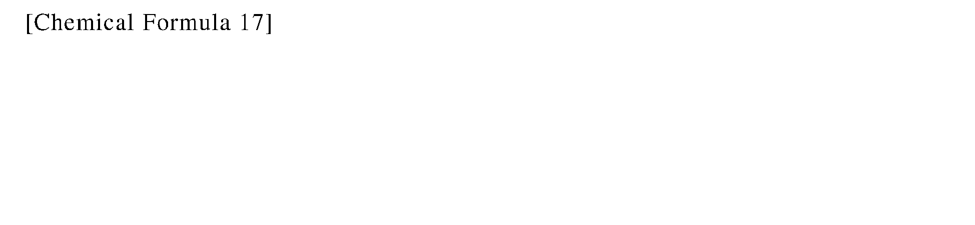

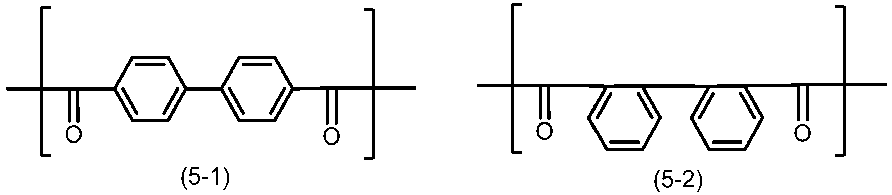

The polyarylate resin (PA) may not include a repeating unit derived from isophthalic acid.

The polyarylate resin (PA) may have an end group. Examples of the end group of the polyarylate resin (PA) include end groups represented by formulas (T-1) and (T-2). A preferable example of the end group represented by formula (T-1) is an end group represented by formula (T-DMP) (also referred to below as end group (T-DMP)). A preferable example of the end group represented by formula (T-2) is an end group represented by formula (T-PFH) (also referred to below as end group (T-PFH)).

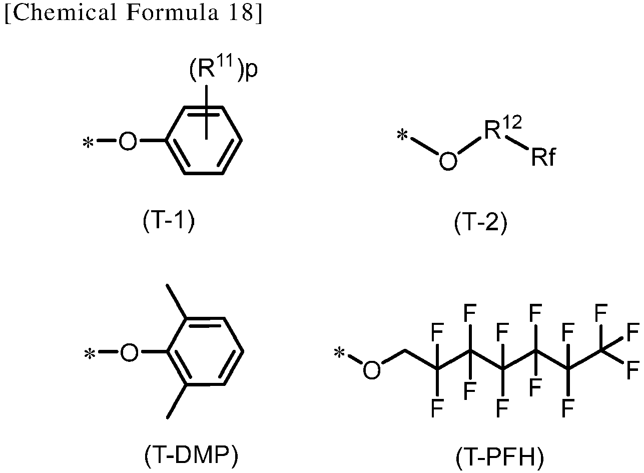

In formula (T-1), R¹¹ represents a halogen atom or an alkyl group with a carbon number of at least 1 and no greater than 6 and p represents an integer of at least 0 and no greater than 5. R¹¹ preferably represents an alkyl group with a carbon number of at least 1 and no greater than 6, more preferably represents an alkyl group with a carbon number of at least 1 and no greater than 3, and further preferably represents a methyl group. p preferably represents an integer of at least 1 and no greater than 3, and more preferably represents 2.

In formula (T-2), R¹² represents an alkanediyl group with a carbon number of at least 1 and no greater than 6 and Rf represents a perfluoroalkyl group with a carbon number of at least 1 and no greater than 10. R¹² preferably represents an alkanediyl group with a carbon number of at least 1 and no greater than 3, and more preferably represents a methylene group. Rf preferably represents a perfluoroalkyl group with a carbon number of at least 3 and no greater than 10, more preferably represents a perfluoroalkyl group with a carbon number of at least 5 and no greater than 7, and further preferably represents a perfluoroalkyl group with a carbon number of 6.

In formulas (T-1), (T-2), (T-DMP), and (T-PFH), * represents a bond. Each bond represented by * in formulas (T-1), (T-2), (T-DMP), and (T-PFH) is bonded to a repeating unit (specifically, the repeating unit (2) or (4)) derived from dicarboxylic acid located at an end of the polyarylate resin (PA).

To favorably form the photosensitive layer, inhibit crystallization of the photosensitive layer, and improve crack resistance and sensitivity characteristics of the photosensitive layer, the polyarylate resin (PA) preferably has an end group having a halogen atom. For the same purpose as above, it is preferable that: R¹ and R² each represent a methyl group and X represents a divalent group represented by formula (X1) in formula (1); and the polyarylate resin (PA) has an end group with a halogen atom.

An example of the end group with a halogen atom is an end group (T-1) where R¹¹ in formula (T-1) represents a halogen atom. Another example of the end group with a halogen atom is the end group (T-2).

Preferable examples of the polyarylate resin (PA) include polyarylate resins (PA-1) and (PA-2) shown in Table 1. The polyarylate resins (PA-1) and (PA-2) include repeating units shown in Table 1 as the repeating units (1) to (4). Further preferable examples of the polyarylate resin (PA) include polyarylate resins (PA-a) to (PA-d) shown in Table 2. The polyarylate resins (PA-a) to (PAd) have end groups shown in Table 2 and include repeating units shown in Table 2 as the repeating units (1) to (4). In Tables 1 and 2, "Units (1) to (4)" indicate the "repeating units (1) to (4)", respectively.

**[Table 1]**

| Polyarylate resin | Unit (1) | Unit (2) | Unit (3) | Unit (4) |
|---|---|---|---|---|
| PA-1 | 1-1 | 2 | 3 | 4 |
| PA-2 | 1-2 | 2 | 3 | 4 |

**[Table 2]**

| Polyarylate resin | Unit (1) | Unit (2) | Unit (3) | Unit (4) | End group |
|---|---|---|---|---|---|
| PA-a | 1-1 | 2 | 3 | 4 | T-DMP |
| PA-b | 1-2 | 2 | 3 | 4 | T-DMP |
| PA-c | 1-1 | 2 | 3 | 4 | T-PFH |
| PA-d | 1-2 | 2 | 3 | 4 | T-PFH |

In the polyarylate resin (PA), repeating units (specifically, the repeating units (1) and (3)) derived from bisphenols and repeating units (specifically, the repeating units (2) and (4)) derived from dicarboxylic acid are adjacent and bonded to each other. That is, the repeating unit (1) may be bonded to the repeating unit (2) or bonded to the repeating unit (4). Also, the repeating unit (3) may be bonded to the repeating unit (2) or bonded to the repeating unit (4). The number of repeats of the repeating unit derived from bisphenol and the number of repeats of the repeating unit derived from dicarboxylic acid are substantially equal to each other and satisfy a calculation formula "number of repeats of repeating units derived from dicarboxylic acids = number of repeats of repeating units derived from bisphenol +1". The polyarylate resin (PA) may be a random copolymer, an alternating copolymer, a periodic copolymer, or a block copolymer, for example.

The polyarylate resin (PA) may further include a repeating unit other than the repeating units (1) to (4) as a repeating unit. However, to favorably form the photosensitive layer, inhibit crystallization of the photosensitive layer, and improve crack resistance and sensitivity characteristics of the photosensitive layer, the percentage content of the total of the numbers of repeats of the repeating units (1) to (4) to the total of the numbers of repeats of all repeating units included in the polyarylate resin (PA) is preferably at least 80%, more preferably at least 90%, and further preferably at least 95%, still further preferably at least 99%, and particularly preferably 100%. That is, the polyarylate resin (PA) particularly preferably includes only the repeating units (1) to (4) each as a repeating unit.

The percentage content of the number of repeats of the repeating unit (1) to the total of the numbers of repeats of repeating units derived from bisphenols in the polyarylate resin (PA) is preferably greater than 50% and less than 100%, more preferably at least 55% and no greater than 90%, further preferably at least 60% and no greater than 80%, still further preferably at least 60% and no greater than 70%, and still more preferably at least 60% and less than 70%. The percentage content of the total of the numbers of repeats of the repeating unit (3) to the total of the numbers of repeats of the repeating units derived from bisphenols in the polyarylate resin (PA) is preferably greater than 0% and less than 50%, more preferably at least 10% and no greater than 45%, further preferably at least 20% and no greater than 40%, still further preferably at least 30% and no greater than 40%, and still more preferably greater than 30% and no greater than 40%.

The percentage content of the number of repeats of the repeating unit (2) to the total of the numbers of repeats of the repeating units derived from dicarboxylic acids in the polyarylate resin (PA) is preferably greater than 30% and no greater than 65%, more preferably at least 35% and no greater than 65%, and further preferably at least 40% and no greater than 60%. The percentage content of the number of repeats of the repeating unit (4) to the total of the numbers of repeats of the repeating units derived from dicarboxylic acids in the polyarylate resin (PA) is preferably greater than 35% and less than 70%, more preferably at least 35% and no greater than 65%, and further preferably at least 40% and no greater than 60%.

The polyarylate resin (PA) has a viscosity average molecular weight of preferably at least 10,000, more preferably at least 30,000, further preferably at least 35,000, still further preferably at least 50,000, and particularly preferably at least 55,000. As a result of the viscosity average molecular weight of the polyarylate resin (PA) being set to at least 10,000, abrasion resistance of the photosensitive member is improved where the polyarylate resin (PA) is contained in the photosensitive layer thereof. By contrast, the polyarylate resin (PA) has a viscosity average molecular weight of preferably no greater than 80,000, more preferably no greater than 70,000, and further preferably no greater than 60,000. As a result of the viscosity average molecular weight of the polyarylate resin (PA) being set to no greater than 80,000, solubility of the polyarylate resin (PA) in a solvent is increased. The viscosity average molecular weight of the polyarylate resin (PA) is measured in accordance with the Japanese Industrial Standards (JIS) K7252-1:2016.

To favorably form the photosensitive layer, inhibit crystallization of the photosensitive layer, and improve crack resistance and sensitivity characteristics of the photosensitive layer, the ratio of the mass of the binder resin (SL) to the mass of the first photosensitive layer and the ratio of the mass of the binder resin (CG) to the mass of the first photosensitive layer is preferably at least 0.35 and no greater than 0.50. In a case in which the binder resin (SL) includes two or more resins, the mass of the binder resin (SL) is the total mass of the two or more resins. In a case in which the binder resin (CG) includes two or more resins, the mass of the binder resin (CG) is the total mass of the two or more resins.

The following describes a method for producing the polyarylate resin (PA). An example of the method for producing the polyarylate resin (PA) is condensation polymerization of bisphenols for forming bisphenol-derived repeating units and dicarboxylic acids for forming dicarboxylic acid-derived repeating units. Any known synthesis method (e.g., solution polymerization, melt polymerization, or interface polymerization) can be employed as condensation polymerization.

Examples of the bisphenols for forming the bisphenol-derived repeating units include compounds represented by formulas (BP-1) and (BP-3) (also referred to below as compounds (BP-1) and (BP-3), respectively). Examples of the dicarboxylic acids for forming the dicarboxylic acid-derived repeating units include compounds represented by formulas (DC-2) and (DC-4) (also referred to below as compounds (DC-2) and (CD-4), respectively). R¹, R², and X in formula (BP-1) are the same as defined for R¹, R², and X in formula (1), respectively.

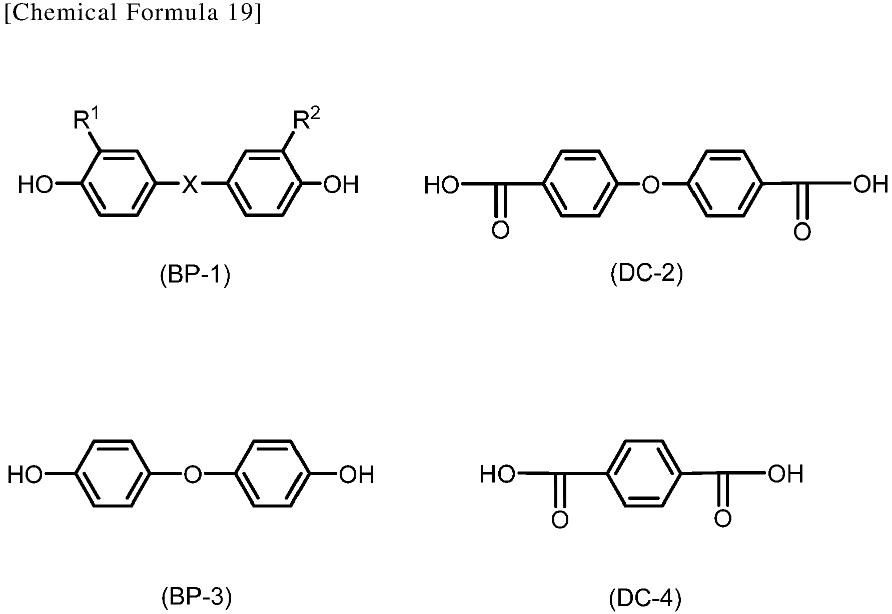

In production of the polyarylate resin (PA), the first percentage content is adjusted by changing the addition amount (unit: mol) of the compound (BP-1) relative to the total (unit: mol) of the addition amounts of the compounds (BP-1) and (BP-3). The first percentage content corresponds to the mole fraction (unit: mol%) of the repeating unit (1) in the total amount of the repeating units (1) and (3) of the polyarylate resin (PA). Also, the second percentage content is adjusted by changing the addition amount (unit: mol) of the compound (DC-2) relative to the total (unit: mol) of the addition amounts of the compounds (DC-2) and (DC-4). The second percentage content corresponds to the mole fraction (unit: mol%) of the repeating unit (2) in the total amount of the repeating units (2) and (4) of the polyarylate resin (PA). The third percentage content is adjusted by changing the addition amount (unit: mol) of the compound (BP-3) relative to the total (unit: mol) of the addition amounts of the compounds (BP-1) and (BP-3). The third percentage content corresponds to the mole fraction (unit: mol%) of the repeating unit (3) in the total amount of the repeating units (1) and (3) of the polyarylate resin (PA). The fourth percentage content is adjusted by changing the addition amount (unit: mol) of the compound (DC-4) relative to the total (unit: mol) of the addition amounts of the compounds (DC-2) and (DC-4). The fourth percentage content corresponds to the mole fraction (unit: mol%) of the repeating unit (4) in the total amount of the repeating units (2) and (4) of the polyarylate resin (PA).

The bisphenols may be derivatized to aromatic diacetates for use. The dicarboxylic acids may be derivatized for use. Examples of derivatives of the carboxylic acids include dicarboxylic acid dichloride, dicarboxylic acid dimethyl ester, dicarboxylic acid diethyl ester, and dicarboxylic acid anhydride. Dicarboxylic acid dichloride is a compound in which two "-C(=O)-OH" groups of dicarboxylic acid are each substituted with a "-C(=O)-Cl" group.

In condensation polymerization of the bisphenols and the dicarboxylic acids, a terminator may be added. Examples of the terminator include 2,6-dimethylphenol and 1H,1H-perfluro-1-heptanol. Use of 2,6-dimethylphenol as a terminator forms the end group (T-DMP). Use of 1H,1H-perfluoro-1-heptanol as a terminator forms the end group (T-PFH).

In condensation polymerization of the bisphenols and the dicarboxylic acids, either or both a base and a catalyst may be added. An example of the base is sodium hydroxide. Examples of the catalyst include benzyltributylammonium chloride, ammonium chloride, ammonium bromide, quaternary ammonium salt, triethylamine, and trimethylamine.

The photosensitive layer (specifically, each of the single-layer photosensitive layer, the charge generating layer, and the charge transport layer) may contain only one polyarylate resin (PA) as a binder resin or may contain two or more polyarylate resins (PA). The photosensitive layer (specifically, each of the single-layer photosensitive layer, the charge generating layer, and the charge transport layer) may contain only the polyarylate resin (PA) as the binder resin, or may further contain a binder resin (also referred to below as additional binder resin) other than the polyarylate resin (PA).

Examples of the additional binder resin include thermoplastic resins (specific examples include polyarylate resin other than the polyarylate resin (PA), polycarbonate resin, styrene-based resin, styrene-butadiene copolymers, styrene-acrylonitrile copolymers, styrene-maleic acid copolymers, styrene-acrylic acid copolymers, acrylic copolymers, polyethylene resin, ethylene-vinyl acetate copolymers, chlorinated polyethylene resin, polyvinyl chloride resin, polypropylene resin, ionomers, vinyl chloride-vinyl acetate copolymers, polyester resin, alkyd resin, polyamide resin, polyurethane resin, polysulfone resin, diallyl phthalate resin, ketone resin, polyvinyl butyral resin, polyvinyl acetal resin, and polyether resin), thermosetting resins (specific examples include silicone resin, epoxy resin, phenolic resin, urea resin, melamine resin, and crosslinkable resins other than these), and photocurable resins (specific examples include epoxy-acrylic acid-based resin and urethane-acrylic acid-based copolymers).

### (Electron Transport Material)

The electron transport material includes a compound represented by formula (10), (11), or (12) (also referred to below as electron transport materials (10), (11), and (12), respectively). As a result of the first photosensitive layer containing any of the electron transport materials (10) to (12) in addition to the first hole transport material, the second hole transport material, and the polyarylate resin (PA), inhibition of the crystallization of the photosensitive layer and improvement of the sensitivity characteristics of the photosensitive member are achieved.

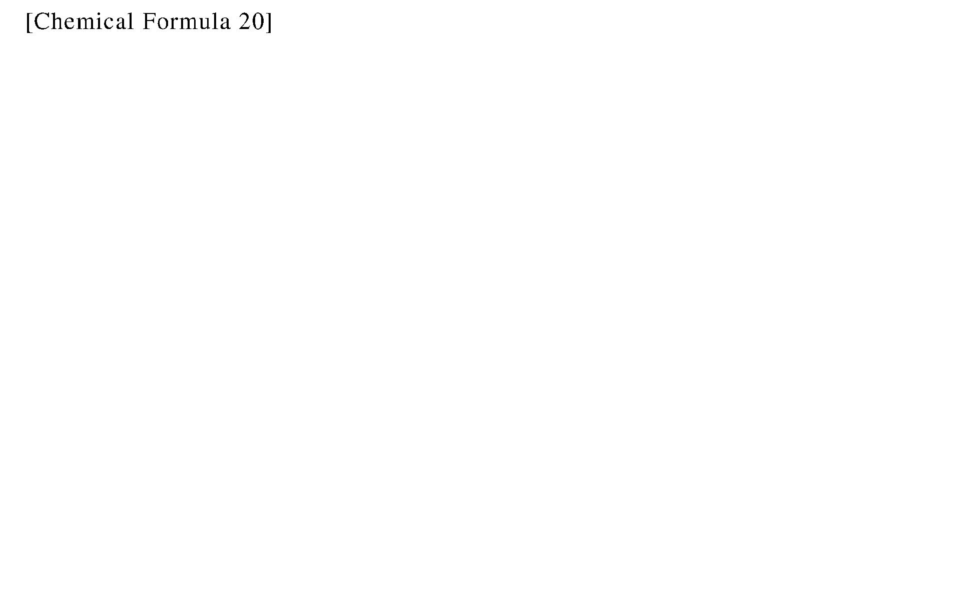

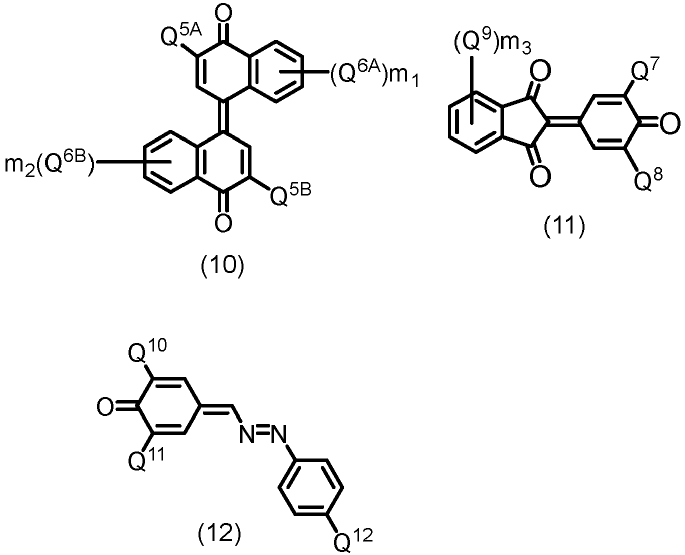

In formula (10), Q^{5A} and Q^{5B} each represent, independently of one another, a hydrogen atom, a phenyl group, an alkyl group with a carbon number of at least 1 and no greater than 8, or an alkoxy group with a carbon number of at least 1 and no greater than 8. Q^{6A} and Q^{6B} each represent, independently of one another, a phenyl group, an alkyl group with a carbon number of at least 1 and no greater than 8, or an alkoxy group with a carbon number of at least 1 and no greater than 8. m₁ and m₂ each represent, independently of one another, an integer of at least 0 and no greater than 4.

Where m₁ represents an integer of at least 2 and no greater than 4, the chemical groups Q^{6A} may be the same as or different from each other. Where m₂ represents an integer of at least 2 and no greater than 4, the chemical groups Q^{6B} may be the same as or different from each other.

In formula (10), Q^{5A} and Q^{5B} each represent, independently of one another, preferably an alkyl group with a carbon number of at least 1 and no greater than 8, more preferably an alkyl group with a carbon number of at least 1 and no greater than 6, and further preferably a 1,1-dimethylpropyl group. It is preferable that m₁ and m₂ each represent 0.

In formula (11), Q⁷ and Q⁸ each represent, independently of one another, a hydrogen atom, a phenyl group, an alkyl group with a carbon number of at least 1 and no greater than 8, or an alkoxy group with a carbon number of at least 1 and no greater than 8. Q⁹ represents a phenyl group, an alkyl group with a carbon number of at least 1 and no greater than 8, or an alkoxy group with a carbon number of at least 1 and no greater than 8. m₃ represents an integer of at least 0 and no greater than 4.

Where m₃ represents an integer of at least 2 and no greater than 4, the chemical groups of Q⁹ may be the same as or different from each other.

In formula (11), Q⁷ and Q⁸ each represent, independently of one another, preferably an alkyl group with a carbon number of at least 1 and no greater than 8, more preferably an alkyl group with a carbon number of at least 1 and no greater than 6, and further preferably a tert-butyl group. It is preferable that m₃ represents 0.

In formula (12), Q¹⁰ and Q¹¹ each represent, independently of one another, a hydrogen atom or an alkyl group with a carbon number of at least 1 and no greater than 6. Q¹² represents a halogen atom or a hydrogen atom.

In formula (12), Q¹⁰ and Q¹¹ each represent, independently of one another, preferably an alkyl group with a carbon number of at least 1 and no greater than 6, and more preferably a tert-butyl group. Q¹² preferably represents a halogen atom, and more preferably represents a chlorine atom.

To improve crack resistance of the photosensitive member and inhibit crystallization, the electron transport material (10) is preferably a compound represented by formula (E-1). For the same purpose as above, the electron transport material (11) is preferably a compound represented by formula (E-2). For the same purpose as above, the electron transport material (12) is preferably a compound represented by formula (E-3). The compounds represented by formulas (E-1), (E-2), and (E-3) may be referred to below as electron transport materials (E-1), (E-2), and (E-3), respectively.

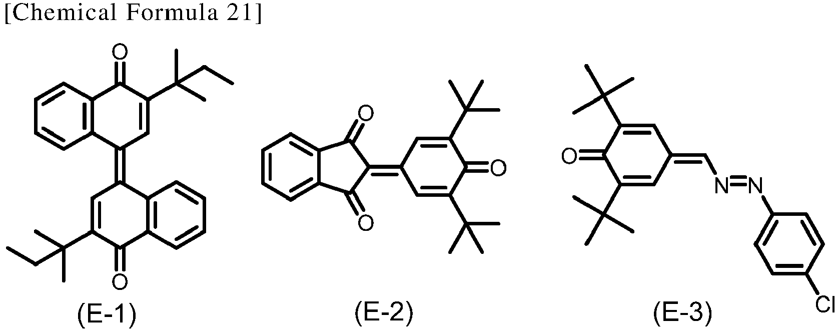

The content of the electron transport material relative to 100 parts by mass of the binder resin (SL) and the content of the electron transport material relative to 100 parts by mass of the binder resin (CG) each are preferably at least 5 parts by mass and no greater than 150 parts by mass, more preferably at least 10 parts by mass and no greater than 100 parts by mass, and further preferably at least 30 parts by mass and no greater than 70 parts by mass.

The first photosensitive layer may contain only one electron transport material, or it may contain two or more electron transport materials. The first photosensitive layer may further contain an electron transport material (also referred to below as optional electron transport material) other than electron transport materials (10), (11), and (12). Examples of the optional electron transport material include quinone-based compounds, diimide-based compounds, hydrazone-based compounds, malononitrile-based compounds, thiopyran-based compounds, trinitrothioxanthone-based compounds, 3,4,5,7-tetranitro-9-fluorenone-based compounds, dinitroanthracene-based compounds, dinitroacridine-based compounds, tetracyanoethylene, 2,4,8-trinitrothioxanthone, dinitrobenzene, dinitroacridine, succinic anhydride, maleic anhydride, and dibromomaleic anhydride. Examples of the quinone-based compounds include diphenoquinone-based compounds, azoquinone-based compounds, anthraquinone-based compounds, naphthoquinone-based compounds, nitro anthraquinone-based compounds, and dinitroanthraquinone-based compounds.

### (Charge Generating Material)

Examples of the charge generating material include a phthalocyanine pigment, a perylene-based pigment, a bisazo pigment, a tris-azo pigment, a dithioketopyrrolopyrrole pigment, a metal-free naphthalocyanine pigment, a metal naphthalocyanine pigment, a squaraine pigment, an indigo pigment, an azulenium pigment, a cyanine pigment, powders of inorganic photoconductive materials (e.g., selenium, selenium-tellurium, selenium-arsenic, cadmium sulfide, and amorphous silicon), a pyrylium pigment, an anthanthrone-based pigment, a triphenylmethane-based pigment, a threne-based pigment, a toluidine-based pigment, a pyrazoline-based pigment, and a quinacridone-based pigment. Each of the single-layer photosensitive layer and the charge generating layer may contain only one charge generating material or may contain two or more charge generating materials.

The phthalocyanine-based pigment is a pigment with a phthalocyanine structure. Examples of the phthalocyanine-based pigment include metal phthalocyanine and metal-free phthalocyanine. Examples of the metal phthalocyanine include titanyl phthalocyanine, hydroxygallium phthalocyanine, and chlorogallium phthalocyanine. The metal-free phthalocyanine is represented by formula (CGM-1). Titanyl phthalocyanine is represented by formula (CGM-2).

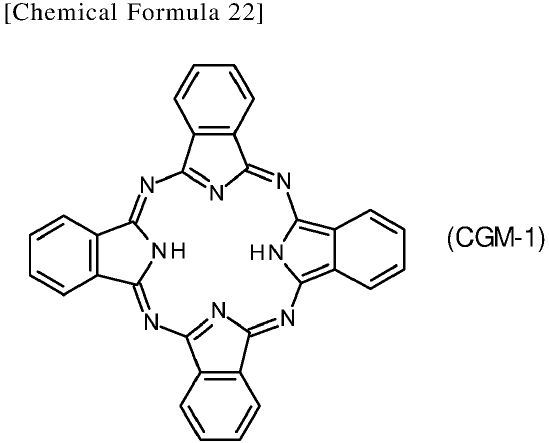

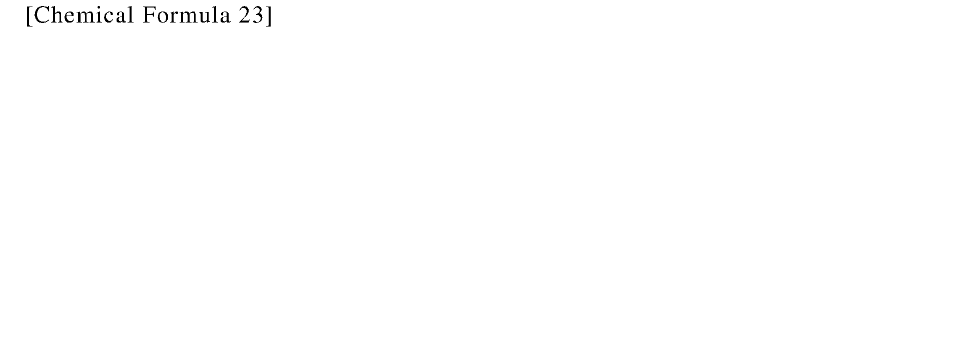

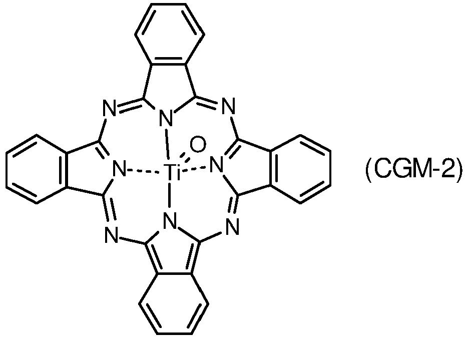

The phthalocyanine-based pigment may be crystalline or non-crystalline. An example of crystal of metal-free phthalocyanine is X-form crystal of metal-free phthalocyanine (also referred to below as X-form metal-free phthalocyanine). Examples of crystal of titanyl phthalocyanine include α-form, β-form, and Y-form crystals of titanyl phthalocyanine (also referred to below as α-form, β-form, and Y-form titanyl phthalocyanines, respectively).

For example, a photosensitive member sensitive in a wavelength range of at least 700 nm is preferably used in a digital optical image forming apparatus (e.g., a laser beam printer or facsimile machine with a light source such as a semiconductor laser). In terms of high quantum yield in a wavelength range of at least 700 nm, the charge generating material is preferably a phthalocyanine-based pigment, more preferably metal-free phthalocyanine or titanyl phthalocyanine, further preferably titanyl phthalocyanine, and particularly preferably Y-form titanyl phthalocyanine.

Y-form titanyl phthalocyanine exhibits a main peak at a Bragg angle (2θ±0.2°) of 27.2° in a CuKα characteristic X-ray diffraction spectrum, for example. The term "main peak" refers to a peak in the CuKα characteristic X-ray diffraction spectrum having a highest or second highest intensity in a range of Bragg angles (2θ±0.2°) from 3° to 40°. Y-form titanyl phthalocyanine has no peaks at 26.2° in the CuKα characteristic X-ray diffraction spectrum.

The CuKα characteristic X-ray diffraction spectrum can be measured by the following method, for example. A sample (titanyl phthalocyanine) is loaded into a sample holder of an X-ray diffraction spectrometer (e.g., "RINT (registered Japanese trademark) 1100", product of Rigaku Corporation) and an X-ray diffraction spectrum is measured using a Cu X-ray tube under conditions of a tube voltage of 40 kV, a tube current of 30 mA, and a wavelength of CuKα characteristic X-rays of 1.542 Å. The measurement range (2θ) is for example from 3° to 40° (start angle: 3°, stop angle: 40°), and the scanning speed is for example 10°/min. A main peak in the obtained X-ray diffraction spectrum is determined and a Bragg angle of the main peak is read.

Each of the amount of the charge generating material relative to 100 parts by mass of the binder resin (SL) and the amount of the charge generating material relative to 100 parts by mass of the binder resin (CG) is preferably at least 0.1 parts by mass and no greater than 50 parts by mass, and more preferably at least 0.5 parts by mass and no greater than 5 parts by mass.

### (Additive)

Examples of the additive include an ultraviolet absorber, an antioxidant, a radical scavenger, a singlet quencher, a softener, a surface modifier, an extender, a thickener, a dispersion stabilizer, a wax, a donor, a surfactant, a plasticizer, a sensitizer, an electron acceptor compound, and a leveling agent.

### (Conductive Substrate)

No particular limitations are placed on the conductive substrate, and it is only required that at least a surface portion of the conductive substrate be constituted by a conductive material. An example of the conductive substrate is a conductive substrate made from a conductive material. Another example of the conductive substrate is a substrate covered with a conductive material. Examples of the conductive material include aluminum, iron, copper, tin, platinum, silver, vanadium, molybdenum, chromium, cadmium, titanium, nickel, palladium, indium, stainless steel, and brass. In terms of excellent mobility of electric charge from the photosensitive layer to the conductive substrate, aluminum or an aluminum alloy is preferable among the conductive materials listed above.

The shape of the conductive substrate is appropriately selected according to the configuration of an image forming apparatus including the conductive substrate. Examples of the shape of the conductive substrate include a sheet-like shape and a drum-like shape. Thickness of the conductive substrate is also appropriately selected according to the shape of the conductive substrate.

### (Intermediate Layer)

The intermediate layer (undercoat layer) contains for example inorganic particles and a resin for intermediate layer use (intermediate layer resin). In presence of the intermediate layer, electric current generated at exposure of the photosensitive member can smoothly flow while an insulation state to an extent that occurrence of leakage current can be inhibited is maintained, thereby suppressing an increase in electric resistance.

Examples of the inorganic particles include particles of metals (e.g., aluminum, iron, and copper), particles of metal oxides (e.g., titanium oxide, alumina, zirconium oxide, tin oxide, and zinc oxide), and particles of non-metal oxides (e.g., silica).

Examples of the intermediate layer resin are the same as those listed as the examples of the additional binder resin as described previously. In order to favorably form the intermediate layer and the photosensitive layer, the intermediate layer resin is preferably different from the binder resin contained in the photosensitive layer. The intermediate layer may contain an additive. Examples of the additive contained in the intermediate layer are the same as those listed as the examples of the additive contained in the photosensitive layer.

### (Photosensitive Member Production Method)

The following describes an example of a single-layer photosensitive member production method and an example of a positively chargeable multi-layer photosensitive member production method each as a photosensitive member production method.

The single-layer photosensitive member production method includes a single-layer photosensitive layer formation process, for example. In the single-layer photosensitive layer formation process, an application liquid (also referred to below as application liquid for single-layer photosensitive layer formation) for forming a single-layer photosensitive layer is prepared. The application liquid for single-layer photosensitive layer formation is applied onto a conductive substrate. Next, at least a portion of a solvent contained in the applied application liquid for single-layer photosensitive layer formation is removed to form a single-layer photosensitive layer. The application liquid for single-layer photosensitive layer formation contains the charge generating material, the binder resin (SL), the electron transport material, the hole transport material (SL), and the solvent, for example. The application liquid for single-layer photosensitive layer formation is prepared by dissolving or dispersing the charge generating material, the binder resin (SL), the electron transport material, and the hole transport material (SL) in the solvent. The application liquid for single-layer photosensitive layer formation may further contain an additive as necessary.

The positively chargeable multi-layer photosensitive member production method includes a charge transport layer formation process and a charge generating layer formation process, for example.

In the charge transport layer formation process, an application liquid for charge transport layer formation is applied onto a conductive substrate. Next, at least a portion of a solvent contained in the applied application liquid for charge transport layer formation is removed to form a charge transport layer. The application liquid for charge transport layer formation contains the hole transport material (CT), the binder resin (CT), and the solvent. The application liquid for charge transport layer formation is prepared by dissolving or dispersing the hole transport material (CT) and the binder resin (CT) in the solvent. The application liquid for charge transport layer formation may further contain an additive as necessary.

In the charge generating layer formation process, an application liquid for charge generating layer formation is applied onto the charge transport layer. Next, at least a portion of a solvent contained in the applied application liquid for charge generating layer formation is removed to form a charge generating layer. The application liquid for charge generating layer formation contains the charge generating material, the binder resin (CG), the electron transport material, the hole transport material (CG), and the solvent, for example. The application liquid for charge generating layer formation is prepared by dissolving or dispersing the charge generating material, the binder resin (CG), the electron transport material, and the hole transport material (CG) in the solvent. The application liquid for charge generating layer formation may further contain an additive as necessary.

No particular limitations are placed on the solvents contained in the application liquid for single-layer photosensitive layer formation, the application liquid for charge generating layer formation, and the application liquid for charge transport layer formation (each also referred generally to below as application liquid) so long as each solvent can dissolve or disperse each component contained in a corresponding one of the application liquids. Examples of the solvents include alcohols (specific examples include methanol, ethanol, isopropanol, and butanol), aliphatic hydrocarbons (specific examples include n-hexane, octane, and cyclohexane), aromatic hydrocarbons (specific examples include benzene, toluene, and xylene), halogenated hydrocarbons (specific examples include dichloromethane, dichloroethane, carbon tetrachloride, and chlorobenzene), ethers (specific examples include dimethyl ether, diethyl ether, tetrahydrofuran, ethylene glycol dimethyl ether, and diethylene glycol dimethyl ether), ketones (specific examples include acetone, methyl ethyl ketone, and cyclohexanone), esters (specific examples include ethyl acetate and methyl acetate), dimethyl formaldehyde, dimethyl formamide, and dimethyl sulfoxide.

Preferably, the solvent contained in the application liquid for charge transport layer formation differs from the solvent contained in the application liquid for charge generating layer formation. This is because it is desirable that the charge transport layer does not dissolve in the solvent of the application liquid for charge generating layer formation when the application liquid for charge generating layer formation is applied onto the charge transport layer.

Each of the application liquids is prepared by mixing the corresponding components in order to disperse the components in the corresponding solvent. Mixing or dispersion can for example be performed using a bead mill, a roll mill, a ball mill, an attritor, a paint shaker, or an ultrasonic disperser.

The method for applying each application liquid is not particularly limited so long as the application liquid can be applied uniformly. Examples of the application method include dip coating, spray coating, spin coating, and bar coating.

Examples of a method for removing at least a portion of the solvent contained in each application liquid include heating, pressure reduction, and a combination of heating and pressure reduction. One specific example of the method involves heat treatment (hot-air drying) using a high-temperature dryer or a reduced pressure dryer. The temperature of the heat treatment is at least 40°C and no greater than 150°C, for example. The time of the heat treatment is at least 3 minutes and no greater than 120 minutes, for example.

The photosensitive member production method may further include either or both an intermediate layer formation process and a protective layer formation process as necessary. Any known method can be selected as appropriate as the intermediate layer formation process or the protective layer formation process.

### <Second Embodiment: Image Forming Apparatus>

The following describes an image forming apparatus according to a second embodiment of the present invention. The image forming apparatus will be described with reference to FIG. 7 using a tandem color image forming apparatus as an example. FIG. 7 is a cross-sectional view of an example of the image forming apparatus.

An image forming apparatus 100 illustrated in FIG. 7 includes image forming units 40a, 40b, 40c, and 40d, a transfer belt 50, and a fixing device 54. Each of the image forming units 40a, 40b, 40c, and 40d is referred below to as image forming unit 40 where it is not necessary to distinguish among the image forming units 40a to 40d.

Each of the image forming units 40 includes an image bearing member 30, a charger 42, a light exposure device 44, a development device 46, and a transfer device 48. The image bearing member 30 is the photosensitive member (specifically, the single-layer photosensitive member 1 or the positively chargeable multi-layer photosensitive member 10) of the first embodiment.

As described previously, the photosensitive layer 3 of the photosensitive member according to the first embodiment can be favorably formed, inhibiting crystallization of the photosensitive layer 3. Additionally, the photosensitive layer 3 exhibits excellent crack resistance and sensitivity characteristics. As such, as a result of including the photosensitive member of the first embodiment as the image bearing member 30, the image forming apparatus 100 can inhibit image defects caused by crystallization and cracks in the photosensitive layer 3 and can form high-quality image due to excellent sensitivity characteristics.

The image bearing member 30 is disposed at a central part of the image forming unit 40. The image bearing member 30 is rotatable in an arrowed direction (anticlockwise direction) in FIG. 7. The charger 42, the light exposure device 44, the development device 46, and the transfer device 48 are disposed around the image bearing member 30 in the stated order from upstream in the rotational direction of the image bearing member 30.

Toner images in multiple colors (e.g., four colors of black, cyan, magenta, and yellow) are sequentially superimposed by the image forming units 40a to 40d one on the other on a recording medium P placed on the transfer belt 50.

The charger 42 charges the surface (e.g., the circumferential surface) of the image bearing member 30 to a positive polarity. In both a case in which the image bearing member 30 is the single-layer photosensitive member 1 and a case in which the image bearing member 30 is the positively chargeable multi-layer photosensitive member 10, the surface of the image bearing member 30 is charged to the positive polarity. The charger 42 is a charging roller, for example.

The light exposure device 44 irradiates the charged surface of the image bearing member 30 with exposure light. That is, the light exposure device 44 exposes the charged surface of the image bearing member 30 to light. An electrostatic latent image is formed on the surface of the image bearing member 30 in the manner described above. The electrostatic latent image is formed based on image data input to the image forming apparatus 100.

The development device 46 develops the electrostatic latent image into a toner image by supplying toner to the surface of the image bearing member 30. The development device 46 (e.g., the surface of the development device 46, more specifically, the circumferential surface of the development device 46) is in contact with the surface of the image bearing member 30. That is, the image forming apparatus 100 adopts a contact development process. The development device 46 is a development roller, for example. In a case in which the developer is a one-component developer, the development device 46 supplies toner, which is the one-component developer, to the electrostatic latent image formed on the image bearing member 30. In a case in which the developer is a two-component developer, the development device 46 supplies toner of the two-component developer containing the toner and a carrier to the electrostatic latent image formed on the image bearing member 30. The image bearing member 30 carries the toner image in the manner described above.

The transfer belt 50 conveys the recording medium P between the image bearing member 30 and the transfer device 48. The transfer belt 50 is an endless belt. The transfer belt 50 circulates in an arrowed direction (clockwise direction in FIG. 7).

The transfer device 48 transfers the toner image developed by the development device 46 from the surface of the image bearing member 30 to a transfer target. The transfer target is the recording medium P. In transfer of the toner image, the image bearing member 30 is in contact with the recording medium P. That is, the image forming apparatus 100 adopts a direct transfer process. The transfer device 48 is a transfer roller, for example.

The recording medium P to which the toner images have been transferred by the transfer device 48 is conveyed to the fixing device 54 by the transfer belt 50. The fixing device 54 includes either or both a heating roller and a pressure roller, for example. Either or both heat and pressure are applied by the fixing device 54 to the unfixed toner images transferred by the transfer device 48. Application of either or both heat and pressure to the toner images fixes the toner images to the recording medium P. As a result, an image is formed on the recording medium P.

An example of the image forming apparatus has been described so far. However, the image forming apparatus is not limited to the previously-described image forming apparatus 100. The previously-described image forming apparatus 100 is a color image forming apparatus, but the image forming apparatus may be a monochrome image forming apparatus. In this case, the image forming apparatus may include only one image forming unit, for example. Furthermore, the previously-described image forming apparatus 100 is a tandem image forming apparatus, but the image forming apparatus may be a rotary image forming apparatus, for example. A charging roller is exemplified as the charger 42. However, the charger may be a charger (e.g., a scorotron charger, a charging brush, or a corotron charger) other than the charging roller. The previously-described image forming apparatus 100 adopts a contact development process. However, the image forming apparatus may adopt a noncontact development process. The previously-described image forming apparatus 100 adopts a direct transfer process. However, the image forming apparatus may adopt an intermediate transfer process. In a case in which the image forming apparatus adopts an intermediate transfer process, the transfer target corresponds to an intermediate transfer belt. In the image forming apparatus, the previously-described image forming units 40 each include no cleaning member but may each further include a cleaning member (e.g., a cleaning blade). Note that the previously-described image forming units 40 each include no static eliminators. However, the image forming units may each further include a static eliminator.

### <Third Embodiment: Process Cartridge>

With further reference to FIG. 7, a process cartridge according to a third embodiment of the present invention will be described next. The process cartridge corresponds to each of the image forming units 40a to 40d. The process cartridge includes the image bearing member 30. The image bearing member 30 is the photosensitive member of the first embodiment. As described previously, the photosensitive layer 3 of the photosensitive member according to the first embodiment can be favorably formed, inhibiting crystallization of the photosensitive layer 3. Additionally, the photosensitive layer 3 exhibits excellent crack resistance and sensitivity characteristics. As such, as a result of including the photosensitive member of the first embodiment as the image bearing member 30, the process cartridge can inhibit image defects caused by crystallization and cracks in the photosensitive layer 3, and it can form high-quality image by virtue of excellent sensitivity characteristics. The process cartridge includes at least one selected from the group consisting of the charger 42, the light exposure device 44, the development device 46, and the transfer device 48 in addition to the image bearing member 30. The process cartridge may further include a cleaning member (not illustrated) and a static eliminator (not illustrated). The process cartridge is designed to be freely attachable to and freely detachable from the image forming apparatus 100. In the above configuration, the process cartridge can be easily handled. As a result, easy and speedy replacement of the process cartridge including the image bearing member 30 can be achieved in a situation in which sensitivity characteristics or the like of the image bearing member 30 degrade. The process cartridge including the photosensitive member of the first embodiment has been described so far with reference to FIG. 7.

### [Example]

### <Preparation of Polyarylate Resins (R-1) to (R-7) and (R-10) to (R-23)>

Polyarylate resins (R-1) to (R-7) of Examples and polyarylate resins (R-10) to (R-23) of Comparative Examples were synthesized according to the methods described below. In the following, the "polyarylate resins (R-1) to (R-7) and (R-10) to (R-23)" may be also referred to below as "resins (R-1) to (R-7) and (R-10) to (R-23)", respectively. Compositions of the respective resins (R-1) to (R-7) and (R-10) to (R-23) are shown below in Tables 3 and 4. Note that the resin (R-20) included the same repeating units in the same ratio as the resin used in Example 4 of Patent Literature 1 (Japanese Patent Application Laid-Open Publication No. H10-20514).

**[Table 3]**

| Monomer | Bisphenol addition rate [%] | | | | | | | Dicarboxylic acid addition rate [%] | | | Terminator | Molecular weight |
|---|---|---|---|---|---|---|---|---|---|---|---|---|
| | BisCZ | BisB | BisC | BisZ | BisCE | BisA | DHPE | DPEC | TPC | IPC | | |
| Resin | Unit (1-1) | Unit (1-2) | Unit (BisC) | Unit (BisZ) | Unit (BisCE) | Unit (BisA) | Unit (3) | Unit (2) | Unit (4) | Unit (IPC) | | |
| R-1 | 80 | - | - | - | - | - | 20 | 65 | 35 | - | DMP | 52000 |
| R-2 | - | 80 | - | - | - | - | 20 | 65 | 35 | - | DMP | 64200 |
| R-3 | 80 | - | - | - | - | - | 20 | 50 | 50 | - | DMP | 54500 |
| R-4 | 80 | - | - | - | - | - | 20 | 35 | 65 | - | DMP | 52700 |
| R-5 | - | 80 | - | - | - | - | 20 | 50 | 50 | - | DMP | 62300 |
| R-6 | 60 | - | - | - | - | - | 40 | 65 | 35 | - | DMP | 58000 |
| R-7 | 80 | - | - | - | - | - | 20 | 65 | 35 | - | PFH | 54300 |

**[Table 4]**

| Monomer | Bisphenol addition rate [%] | | | | | | | Dicarboxylic acid addition rate [%] | | | Terminator | Molecular weight |
|---|---|---|---|---|---|---|---|---|---|---|---|---|
| | BisCZ | BisB | BisC | BisZ | BisCE | BisA | DHPE | DPEC | TPC | IPC | | |
| Resin | Unit (1-1) | Unit (1-2) | Unit (BisC) | Unit (BisZ) | Unit (BisCE) | Unit (BisA) | Unit (3) | Unit (2) | Unit (4) | Unit (IPC) | | |
| R-10 | - | - | - | - | - | 100 | - | - | 50 | 50 | DMP | 51000 |
| R-11 | 50 | - | - | - | - | - | 50 | 65 | 35 | - | DMP | 58600 |
| R-12 | 80 | - | - | - | - | - | 20 | 100 | - | - | DMP | 57200 |
| R-13 | 60 | - | - | - | - | - | 40 | 100 | - | - | DMP | 56600 |
| R-14 | - | 80 | - | - | - | - | 20 | 100 | - | - | DMP | 61000 |
| R-15 | - | - | - | 80 | - | - | 20 | 65 | 35 | - | DMP | Unmeasurable |
| R-16 | - | - | 80 | - | - | - | 20 | 65 | 35 | - | DMP | 49900 |
| R-17 | - | 80 | - | - | - | - | 20 | 50 | 25 | 25 | DMP | 50800 |
| R-18 | 80 | - | - | - | - | - | 20 | 25 | 75 | - | DMP | 52100 |
| R-19 | 100 | - | - | - | - | - | - | 65 | 35 | - | DMP | 53500 |
| R-20 | - | - | - | 100 | - | - | - | 50 | 30 | 20 | DMP | Unmeasurable |
| R-21 | 80 | - | - | - | - | - | 20 | 65 | - | 35 | DMP | 48100 |
| R-22 | - | - | - | - | 70 | - | 30 | 100 | - | - | DMP | 56900 |
| R-23 | 80 | - | - | - | - | - | 20 | - | 100 | - | DMP | 42300 |

In Tables 3 and 4, "BisCZ", "BisB", "BisC", "BisZ", "BisCE", "BisA", "DHPE", "DPEC", "TPC", and "IPC" respectively refer to compounds represented by the following formulas (BisCZ), (BisB), (BisC), (BisZ), (BisCE), (BisA), (DHPE), (DPEC), (TPC), and (IPC) (also referred to below as compounds (BisCZ), (BisB), (BisC), (BisZ), (BisCE), (BisA), (DHPE), (DPEC), (TPC), and (IPC), respectively).

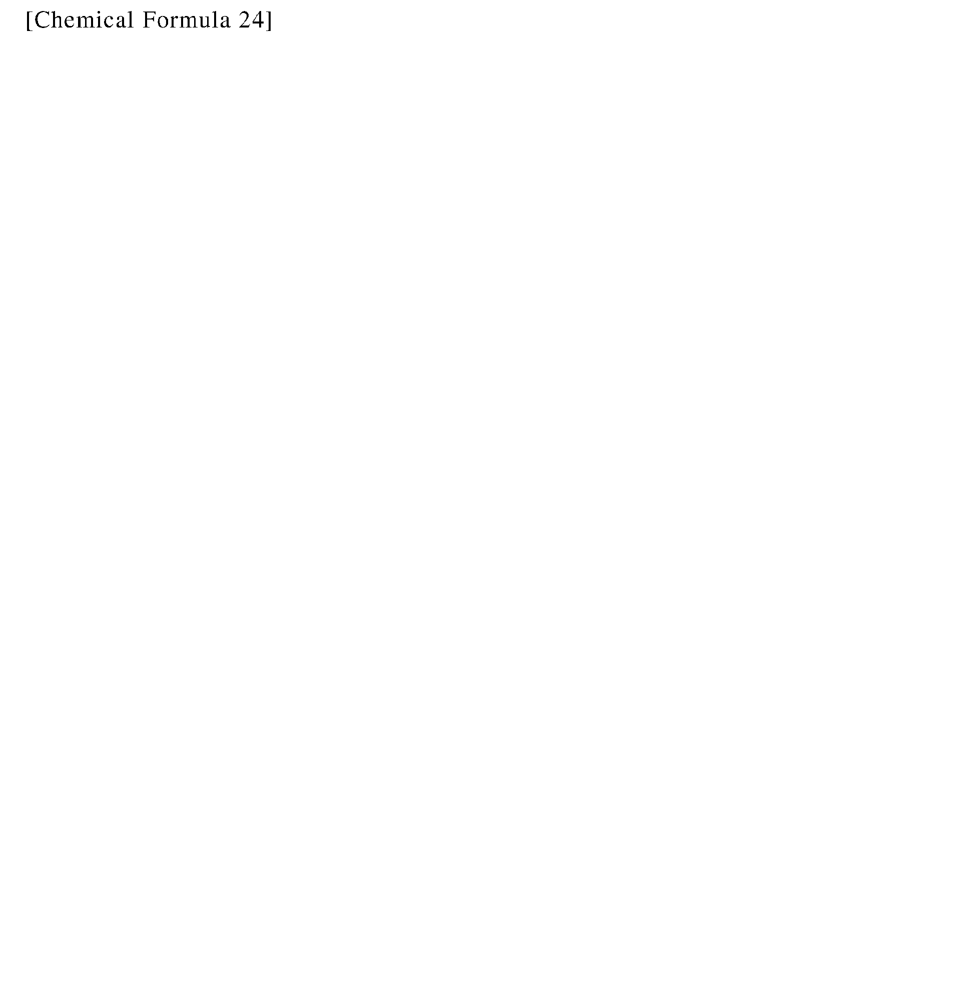

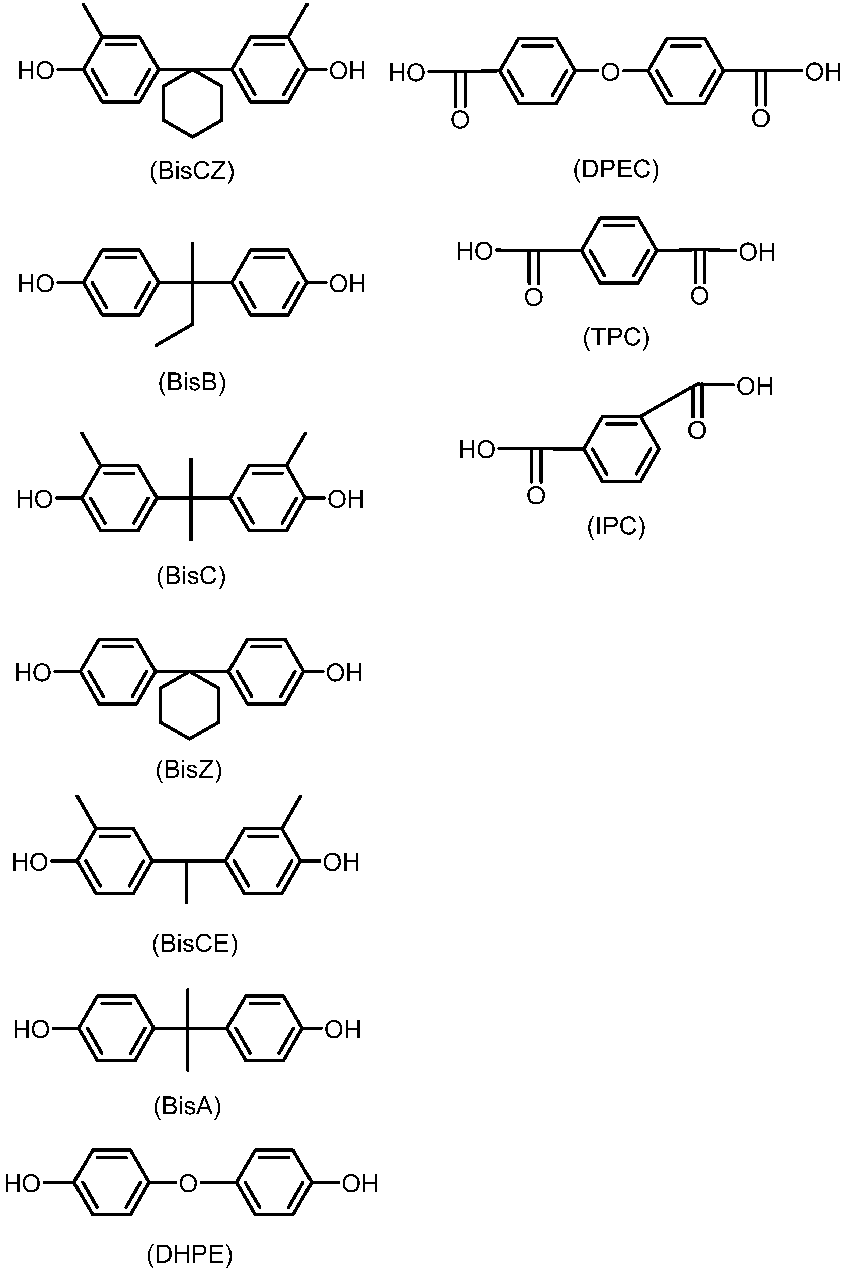

The terms in Tables 3 and 4 mean as follows.
Monomer: monomer used for synthesis of corresponding polyarylate resin
Resin: polyarylate resin
Bisphenol addition rate: percentage (unit: %) of amount (unit: mol) of corresponding bisphenol monomer to total amount (unit: mol) of bisphenol monomers added in synthesis of corresponding polyarylate resin
Dicarboxylic acid addition rate: percentage (unit: %) of amount (unit: mol) of corresponding dicarboxylic acid monomer to total amount (unit: mol) of dicarboxylic acid monomers added in synthesis of corresponding polyarylate resin
Unit: repeating unit Note that the repeating units indicated in Tables 3 and 4 are each formed from corresponding one of monomers indicated in Tables 3 and 4.
Unit (BisC): repeating unit derived from compound (BisC)
Unit (BisZ): repeating unit derived from compound (BisZ)
Unit (BisCE): repeating unit derived from compound (BisCE)
Unit (BisA): repeating unit derived from compound (BisA)
Unit (IPC): repeating unit derived from compound (IPC)
DMP: 2,6-dimethylphenol
PFH: 1H,1H-perfluoro-1-heptanol
Molecular weight: viscosity average molecular weight
-: non-use of corresponding monomer
Unmeasurable: the viscosity average molecular weight was not measured because the corresponding resin did not dissolve in the solvent for viscosity/molecular weight measurement use.

### (Synthesis of Resin (R-1))

A three-necked flask equipped with a thermometer, a three-way cock, and a dropping funnel was used as a reaction vessel. The reaction vessel was charged with the compound (BisCZ) (32.8 mmol) being a monomer, the compound (DHPE) (8.2 mmol) being a monomer, 2,6-dimethylphenol (0.413 mmol) being a terminator, sodium hydroxide (98 mmol), and benzyltributylammonium chloride (0.384 mmol). The reaction vessel was purged with an argon gas. Water (300 mL) was added to the contents of the reaction vessel. The contents of the reaction vessel were stirred at 50°C for 1 hour. The contents of the reaction vessel were cooled to 10°C to yield an alkaline aqueous solution S-A.

Next, dicarboxylic acid dichloride (20.8 mmol) of the compound (DPEC) being a monomer and dicarboxylic acid dichloride (11.2 mmol) of the compound (TPC) being a monomer were dissolved in chloroform (150mL). Through the above, a chloroform solution S-B was yielded.

Using the dropping funnel, the chloroform solution S-B was gradually dripped into the alkaline aqueous solution S-A over 110 minutes. A polymerization reaction was allowed to proceed by stirring the contents of the reaction vessel for 4 hours while the temperature (liquid temperature) of the contents of the reaction vessel was adjusted to 15±5°C. The upper layer (water layer) of the contents of the reaction vessel was removed using a decant to obtain an organic layer. Next, ion exchange water (400mL) was added into a conical flask. The obtained organic layer was further added into the conical flask. Chloroform (400 mL) and acetic acid (2 mL) were further added into the conical flask. The contents of the conical flask were stirred for 30 minutes at room temperature (25°C). The upper layer (water layer) of the contents of the conical flask was removed using a decant to obtain an organic layer. The obtained organic layer was washed with ion exchange water (1 L) using a separatory funnel. The washing with ion exchange water was repeated 5 times to obtain a washed organic layer. Next, the washed organic layer was filtered to yield a filtrate. The resulting filtrate was gradually dripped into methanol (1 L) to yield a precipitate. The precipitate was taken out by filtration. The taken-out precipitate was vacuum-dried at a temperature of 70°C for 12 hours. Through the above, a resin (R-1) was obtained.

### (Synthesis of Resins (R-2) to (R-7) and (R-10) to (R-23))

Resins (R-2) to (R-7) and (R-10) to (R-23) were synthesized according to the same method as that for synthesis of the resin (R-1) in all aspects other than use of the monomers indicated in Tables 3 and 4 in corresponding amounts in terms of addition rate indicated in Tables 3 and 4. Note that the addition amount of each bisphenol monomer was set so that each total amount of the bisphenol monomers was 41.0 mmol and so as to correspond to a corresponding bisphenol addition rate indicated in Tables 3 and 4. For example, in synthesis of the resin (R-5), the addition amount of the compound (BisB) was 32.8 mmol (= 41.0 × 80/100) and the addition amount of the compound (DHPE) was 8.2 mmol (= 41.0 × 20/100). Furthermore, the addition amount of each dicarboxylic acid monomer was set so that each total amount of the dicarboxylic acid monomers was 32.0 mmol and so as to correspond to a corresponding dicarboxylic acid addition rate indicated in Tables 3 and 4. For example, in synthesis of the resin (R-5), the addition amount of the compound (DPEC) was 16.0 mmol (= 32.0 × 50/100) and the addition amount of the compound (TPC) was 16.0 mmol (=32.0 × 50/100).

The ¹H-NMR spectrum of each of the obtained resins (R-1) to (R-7) and (R-10) to (R-23) was plotted using a proton nuclear magnetic resonance spectrometer (product of JEOL Ltd., 600 MHz). Deuterated chloroform was used as a solvent. Tetramethylsilane (TMS) was used as an internal standard sample. The ¹H-NMR NMR spectrum of the resin (R-1) is shown in FIG. 8 as a typical example of the resins (R-1) to (R-7) and (R-10) to (R-23). It was confirmed from the chemical shift read from the ¹H-NMR spectrum that the resin (R-1) had been obtained. It was also confirmed by the same method that the resins (R-2) to (R-7) and (R-10) to (R-23) had been obtained.

### <Measurement of Viscosity Average Molecular Weight>

The viscosity average molecular weights of the resins were measured in accordance with the Japanese Industrial Standard (JIS) K7252-1:2016. The measured viscosity average molecular weights are shown in Tables 3 and 4.

### <Polycarbonate Resins (R-8) and (R-9)>

Polycarbonate resins represented by formulas (R-8) and (R-9) were prepared as binder resins used for production of photosensitive members of Comparative Examples. In the following, the "polycarbonate resins represented by formulas (R-8) and (R-9)" may also be referred to below as "resins (R-8) and (R-9)", respectively. The resins (R-8) and (R-9) had viscosity average molecular weights of 65,000 and 58,000, respectively.

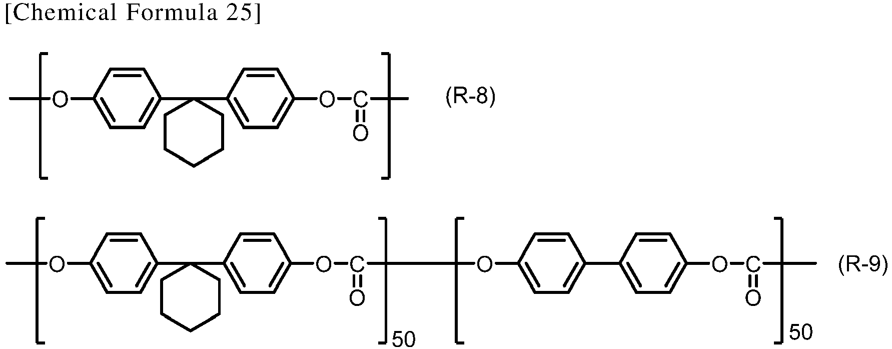

<Preparation of Hole Transport Material>

Samples (M-A1) to (M-A4) each being a mixtures of hole transport materials (1) and (2) were synthesized by the method shown below. In addition, samples (M-B1) to (M-B5) used in Comparative Examples were synthesized by the method shown below. The compositions of samples (M-A1) to (M-A4) and (M-B1) to (M-B5) are shown in Tables 5 to 10. In the explanation of the synthesis method of each sample shown below, compounds represented by the following formulas (A-1) to (A-4), (B-1), (B-2), and (C-1), may be referred to below as compounds (A-1) to (A-4), (B-1), (B-2), and (C-1), respectively.

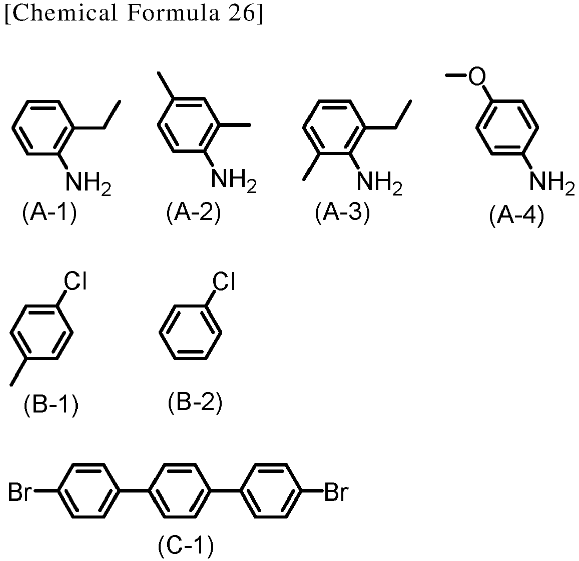

### (Preparation of Sample (M-A1))

The sample (M-A1) was prepared according to the following reaction formula (r-a).

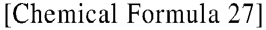

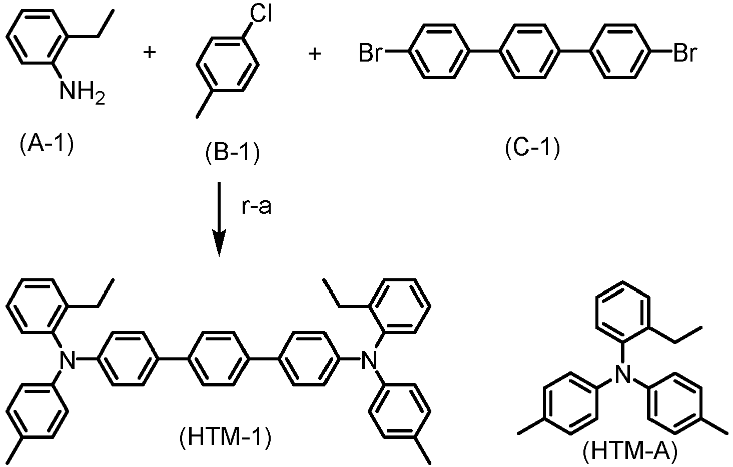

Specifically, tris(dibenzylideneacetone)dipalladium (0.0366 g, 0.040 mmol), 2-dicyclohexylphosphino-2',4',6'-triisopropyl biphenyl (0.0763 g, 0.016 mmol) and sodium tert-butoxide (9.669 g, 100.7 mmol) were charged into a 500 mL three-necked flask equipped with a fractionating column. The air in the flask was replaced with nitrogen gas by repeating degassing and nitrogen gas replacement in the flask twice.

Next, 2-ethylaniline (compound (A-1), 8.45 g, 69.8 mmol), 4-chlorotoluene (compound (B-1), 10.13 g, 80.0 mmol), and xylene (45 g) was further added into the flask. The temperature of the liquid in the flask was raised to 130°C, causing the liquid to undergo reflux. Note that the temperature of the liquid was raised while tert-butanol generated during the temperature raising was distilled off. The liquid was stirred (corresponding to the first stirring) at 130°C for 2 hours under reflux of the liquid. Next, the liquid in the flask was cooled to 50°C.

Next, sodium tert-butoxide (7.680 g, 80.0 mmol), 4,4"-dibro-p-terphenyl (compound (C-1), 11.60 g, 30.0 mmol), and palladium acetate (II) (0.0168 g, 0.075 mmol), 2-dicyclohexylphosphino-2',4',6'-triisopropylbiphenyl (0.1425 g, 0.299 mmol), and xylene (32 g) were further added to the liquid in the flask. The temperature of the liquid in the flask was raised to 130°C, causing the liquid to reflux. Note that the temperature of the liquid was raised while tert-butanol generated during the temperature raising was distilled off. The liquid was stirred (corresponding to the second stirring) at 130°C for 3 hours under reflux of the liquid.

Next, the liquid in the flask was cooled to 90°C. The liquid at 90°C in the flask was filtered to remove insoluble matter in the liquid to obtain a filtrate. The filtrate was subjected to activated clay treatment twice. The activated clay treatment was treatment in which activated clay ("SA-1", product of Nihon Kassei Hakudo Co., Ltd., 8 g) was added to the filtrate and the resulting mixture was stirred at 110°C for 15 minutes and re-filtered to collect the resulting filtrate. The filtrate, having undergone activated clay treatment twice was concentrated under reduced pressure to obtain a concentrated solution. Approximately 50 g of isohexane was added to the concentrated solution, enough to make the concentrate slightly cloudy. Subsequently, methanol (50 g) was added thereto. The concentrated solution was cooled to 5°C, and the precipitated crystals were taken out through filtration. The crystals to which 100g of xylene had been added were heated to 110°C to dissolve the crystals in xylene to obtain a solution. The solution was subjected to the above-mentioned activated clay treatment 5 times. The filtrate having undergone the activated clay treatment 5 times was concentrated under reduced pressure to obtain a concentrated solution. Approximately 50g of isohexane was added to the concentrated solution, enough to make the concentrate slightly cloudy. Subsequently, methanol (50 g) was added thereto. The concentrated solution was cooled to 5°C, and the precipitated crystals were taken out through filtration. The obtained crystals were vacuum-dried at 70°C for 24 hours to obtain the sample (M-A1). The sample (M-A1) was a mixture containing the hole transport material (HTM-1) and the hole transport material (HTM-A). The yield of sample (M-A1) was 16.3g. The yield of the hole transport material (HTM-1) contained in the sample (M-A1) to the compound (C-1) was 84%.

### (Preparation of Sample (M-A2))

The sample (M-A2) was prepared according to the same method as that for preparing the sample (M-A1) in all aspects other than that 69.8 mmol of the compound (A-1) was changed to 69.8 mmol of the compound (A-2). The sample (M-A2) was a mixture containing the hole transport material (HTM-2) and the hole transport material (HTM-B).

### (Preparation of Sample (M-A3))

Sample (M-A3) was prepared according to the same method as that for preparing the sample (M-A1) in all aspects other than that 69.8 mmol of the compound (A-1) was changed to 69.8 mmol of the compound (A-3). Th sample (M-A3) was a mixture containing the hole transport material (HTM-3) and the hole transport material (HTM-C).

### (Preparation of Sample (M-A4))

The sample (M-A4) was prepared according to the same method as that for preparing the sample (M-A1) in all aspects other than that 69.8 mmol of the compound (A-1) was changed to 69.8 mmol of the compound (A-4) and 80.0 mmol of the compound (B-1) was changed to 80.0 mmol of the compound (B-2). The sample (M-A4) was a mixture containing the hole transport material (HTM-4) and the hole transport material (HTM-D).

### (Preparation of Sample (M-B1))

The sample (M-A1) was purified by silica gel column chromatography with a mixed solvent of toluene and isohexane (in a volume ratio of 50:50) as a developing solvent. In this way, a fraction containing the hole transport material (HTM-1) was separated. The separated liquid (fraction) was concentrated under reduced pressure until it became slightly cloudy, yielding a concentrated liquid. Isohexane and methanol were added to the concentrated liquid. The concentrated liquid was cooled to 5°C, and the precipitated crystals were taken out through filtration, thereby obtaining the sample (M-B1). The sample (M-B1) contained only the hole transport material (HTM-1) and did not contain the hole transport material (HTM-A).

### (Preparation of Sample (M-B2))

The sample (M-B2) was prepared according to the same method as that for preparing the sample (M-B1) in all aspects other than that the sample (MA1) was changed to the sample (M-A2). The sample (M-B2) contained only the hole transport material (HTM-2) and did not contain the hole transport material (HTM-B).

### (Preparation of Sample (M-B3))

The sample (M-B3) was prepared according to the same method as that for preparing the sample (M-B1) in all aspects other than that the sample (MA1) was changed to the sample (M-A3). The sample (M-B3) contained only the hole transport material (HTM-3) and did not contain the hole transport material (HTM-C).

### (Preparation of Sample (M-B4))

The sample (M-B4) was prepared according to the same method as that for preparing the sample (M-B1) in all aspects other than that the sample (MA1) was changed to the sample (M-A4). The sample (M-B4) contained only the hole transport material (HTM-4) and did not contain the hole transport material (HTM-D).

### (Preparation of Sample (M-B5))

The sample (M-A1) was purified by silica gel column chromatography with a mixed solvent of toluene and isohexane (in a volume ratio of 50:50) as a developing solvent. In this way, a fraction containing the hole transport material (HTM-A) was separated. The separated liquid (fraction) was concentrated under reduced pressure until it became slightly cloudy, yielding a concentrated liquid. Isohexane and methanol were added to the concentrate liquid. The concentrated liquid was cooled to 5°C, and the precipitated crystals were taken out by filtration, thereby obtaining the sample (M-B5). The sample (M-B5) contained only the hole transport material (HTM-A) and did not contain the hole transport material (HTM-1).

### (Percentage Content Measurement of Hole Transport Material (1))

With respect to each prepared sample, a percentage content of the hole transport material (1) to the total mass of the hole transport material (1) and the hole transport material (2) was measured. As the percentage content of the hole transport material (1), the percentage contents of the hole transport materials (HTM-1) to (HTM-4) included in formula (1) were measured. The measurement method was as follows.

A tetrahydrofuran solution was obtained by dissolving 2.0 mg of a sample (more specifically, any of the samples (M-A1) to (M-A4) and (M-B1) to (M-B5)) in 670 mg of tetrahydrofuran. Note that tetrahydrofuran containing no stabilizer was used. The resulting tetrahydrofuran solution was analyzed by high performance liquid chromatography (HPLC). Specifically, a tetrahydrofuran solution of the sample was analyzed using the analyzer under the analysis conditions shown below, resulting in the generation of an HPLC chart. The content of the hole transport material (1) in the sample was determined from the peak area of the hole transport material (1) in the HPLC chart. The content of the hole transport material (2) in the sample was determined from the peak area of the hole transport material (2) in the HPLC chart. The percentage content of the hole transport material (1) was calculated from the content of the hole transport material (1) and the content of the hole transport material (2) determined as above. The calculation results are shown in the column "Percentage content" of Table 3.

### (Analyzer and Analysis Conditions)

- Analyzer: "LACHROM ELITE", product of Hitachi High-Tech Corporation
- Detection wavelength: 254 nm
- Column: "INERTSIL (registered Japanese trademark) ODS-3" (Inner diameter: 4.6 mm, length: 250 mm)
- Column temperature: 40°C
- Eluent: acetonitrile
- Flow rate: 1 mL/min
- Sample injection amount: 1 µL

### <Single-layer Photosensitive Member Production>

### (Production of Single-layer Photosensitive Member (A-1))

A dispersion was yielded by mixing 2 parts by mass of Y-form titanyl phthalocyanine being a charge generating material, 70 parts by mass of the sample (M-A1) (equivalent to 67.6 parts by mass of the hole transport material (HTM-1) and 2.5 parts by mass of the hole transport material (HTM-A)) as the hole transport material (SL), 40 parts by mass of the electron transport material (E-1), 90 parts by mass of the resin (R-1) as the binder resin (SL), and 500 parts by mass of tetrahydrofuran as a solvent for 20 minutes using a rod-shaped sonic oscillator. The dispersion was filtered using a filter with an opening of 5 µm to obtain an application liquid for single-layer photosensitive layer formation. The application liquid for single-layer photosensitive layer formation was applied onto a conductive substrate (drum-shaped aluminum support) by dip coating, and hot-air dried at 120°C for 50 minutes. Through the above, a single-layer photosensitive layer (film thickness 30 µm) was formed on the conductive substrate to obtain a single-layer photosensitive member (A-1). In the single-layer photosensitive member (A-1), a single-layer photosensitive layer was directly provided on the conductive substrate.

### (Production of Single-layer Photosensitive Members (A-2) to (A-14) and (B-1) to (B-26))

Single-layer photosensitive members (A-2) to (A-14) and (B-1) to (B-26) were produced according to the same method as that for producing the single-layer photosensitive member (A-1) in all aspects other than use of the binder resins (SL), the hole transport materials (SL), and the electron transport materials shown in Tables 5 to 7. Note that the addition amount of a sample being a hole transport material (SL) in production of any of the single-layer photosensitive members was 70 parts by mass. The addition amount (unit: part by mass) of the first hole transport material is calculated from the formula "addition amount of first hole transport material = 70 × percentage content of first hole transport material/100". The addition amount (unit: part by mass) of the second hole transport material is calculated from the formula "addition amount of second hole transport material = 70 × (100 - percentage content of first hole transport material)/100".

### <Positively Chargeable Multi-Layer Photosensitive Member Production>

### (Production of Positively Chargeable Multi-layer photosensitive member (C-1)

First, a charge transport layer was formed. In detail, a dispersion was yielded by mixing 100 parts by mass of the Sample (M-A1) (equivalent to 96.5 parts by mass of the hole transport material (HTM-1) and 3.5 parts by mass of the hole transport material (HTM-A)) as the hole transport material (CT), 100 parts by mass of the resins (R-1) as the binder resin (CT), and 500 parts by mas of tetrahydrofuran as a solvent for 20 minutes using a rod-shaped sonic oscillator. The dispersion was filtered using a filter with an opening of 5 µm to obtain an application liquid for charge transport layer formation. The application liquid for charge transport layer formation was applied onto a conductive substrate (drum-shaped aluminum support) by dip coating, and hot-air dried at 120°C for 50 minutes. Through the above, a charge transport layer (film thickness 15 µm) was formed on the conductive substrate.

Next, a charge generating layer was formed. In detail, a dispersion was yielded by mixing 2 parts by mass of Y-form titanyl phthalocyanine as a charge generating material, 70 parts by mass of the sample (M-A1) (equivalent to 67.6 parts by mass of the hole transport material (HTM-1) and 2.5 parts by mass of the hole transport material (HTM-A)) as the hole transport material (CG), 40 parts by mass of the electron transport material (E-1), 90 parts by mass of the resin (R-1) as the binder resin (CG), and 500 parts by mass of 1,2-dichloroethane as a solvent for 20 minutes using a rod-shaped sonic oscillator. The dispersion was filtered using a filter with an opening of 5 µm to obtain an application liquid for charge generating layer formation. The application liquid for charge generating layer formation was applied onto the formed charge transport layer by dip coating, and hot-air dried at 120°C for 50 minutes. In the manner described above, the charge generating layer (film thickness 15 µm) was formed on the charge transport layer to obtain a positively chargeable multi-layer photosensitive member (C-1). In the positively chargeable multi-layer photosensitive member (C-1), the charge transport layer was directly provided on the conductive substrate and the charge generating layer was directly provided on the charge transport layer.

### (Production of Positively Chargeable Multi-Layer Photosensitive Members (C-2) to (C-14) and (D-1) to (D-26))

Positively chargeable multi-layer photosensitive members (C-2) to (C-14) and (D-1) to (D-26) were produced according to the same method as that for producing the positively chargeable multi-layer photosensitive member (C-1) in all aspects other than use of the binder resins (CG), the hole transport materials (CG), and the electron transport materials shown in Tables 8 to 10. Note that the addition amount of a sample being a hole transport material (CG) in production of any of the positively chargeable multi-layer photosensitive members was 70 parts by mass. The addition amount (unit: part by mass) of the first hole transport material is calculated from the formula "addition amount of first hole transport material = 70 × percentage content of first hole transport material/100". The addition amount (unit: part by mass) of the second hole transport material is calculated from the formula "addition amount of second hole transport material = 70 × (100 - percentage content of first hole transport material)/100".

### (Evaluation of Sensitivity Characteristics)

The sensitivity characteristics of each of the photosensitive members (specifically, the single-layer photosensitive members and the positively chargeable multi-layer photosensitive members) were evaluated in an environment with a temperature of 23°C and a relative humidity of 50%. The surface of the photosensitive member was charged to +750V using a drum sensitivity tester (product of GENTEC CO., LTD). Next, monochromatic light (wavelength: 780 nm, half width: 20 nm, light energy: 1.0 µJ/cm²) was extracted from the light of a halogen lamp using a band pass filter and then irradiated onto the surface of the photosensitive member. The surface potential of the photosensitive member was measured 0.5 seconds after the monochromatic light irradiation ended. The measured surface potential was taken as a post-exposure potential V_{L} (unit: +V) of the photosensitive member. The sensitivity characteristics of the photosensitive member were determined from the post-exposure potential V_{L} according to the following criteria. The post-exposure potential V_{L} of the photosensitive member and the determination results are shown in Tables 5 to 10.

### (Evaluation Criteria of Sensitivity Characteristics)

A: Post-exposure potential V_{L} of less than +130V.
B: Post-exposure potential V_{L} of at least +130V and less than +140V.
C: Post-exposure potential V_{L} of at least +140V.

### <Evaluation of Crack Resistance>

Crack resistance of each of the photosensitive members (specifically, the single-layer type photosensitive members and the positively chargeable multi-layer photosensitive members) was evaluated in an environment with a temperature of 23°C and a relative humidity of 50%. An area up to 40 mm from the lower end of the photosensitive member was immersed in an isoparaffin-based hydrocarbon solvent ("ISOPAR L", product of Exxon Mobil Corporation) for 24 hours. After the 24-hour immersion, the number of cracks generated on the surface of the photosensitive member was confirmed. Crack resistance was evaluated based on the number of the cracks according to the following criteria. The evaluation results are shown in Tables 5 to 10.

### (Evaluation Criteria of Crack Resistance)

A: The number of cracks of no greater than 20
B: The number of cracks of at least 21 and no greater than 100.
C: The number of cracks of at least 101.

### (Evaluation of Crystallization Inhibition)

The entire area of the photosensitive layer of each of the photosensitive members (more specifically, the single-layer photosensitive members and the positively chargeable multi-layer photosensitive members) was observed with the naked eye to confirm the presence or absence of a crystallized portion in the photosensitive layer. Evaluation was carried out to determine whether crystallization of the photosensitive member had been inhibited based on the confirmation results according to the following criteria. The evaluation results are shown in Tables 5 to 10.

### (Evaluation Criteria of Crystallization Inhibition)

A: No crystallized portion was observed.
B: Crystallized portions were confirmed.

### <Comprehensive Evaluation>

A photosensitive member rated as A in all the evaluations of sensitivity characteristics, crack resistance, and crystallization inhibition was determined to be acceptable. Conversely, a photosensitive member not rated as A in at least one of the evaluations of sensitivity characteristics, crack resistance, or crystallization inhibition was determined to be rejected.

Tables 5 to 10 are shown below. Note that the terms in Tables 5 to 10 mean as follows.
- HTM: hole transport material
- HTM (1): first hole transport material
- HTM (2): second hole transport material
- HTM (1) percentage content: percentage content (unit: wt%, or % by mass) of the hole transport material (1) to total mass of hole transport materials (1) and (2)
- ETM: electron transport material
- Resin: binder resin
- Application liquid preparation impossible: the resin did not dissolve in the solvent of the application liquid for the first photosensitive layer, preventing the formation of the first photosensitive layer, consequently, the photosensitive member could not be evaluated
- Hardness: Vickers hardness
- V_{L}: post-exposure potential
- Crack: results of evaluation of crack resistance for photosensitive member
- Crystallization: results of evaluation of crystallization inhibition of photosensitive member
- -: no containment of corresponding component
- E-4: compound represented by the following formula (E-4)

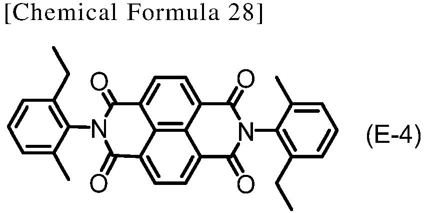

**[Table 5]**

| | Single-layer photosensitive member | Single-layer photosensitive layer | | | | | | VL | | Crack | Crystallization |
|---|---|---|---|---|---|---|---|---|---|---|---|
| | | Resin | HTM | | | | ETM | | | | |
| | | | Sample | HTM (1) | HTM (2) | HTM (1) percentage content [%] | | Value [+V] | Rating | | |
| Example 1 | A-1 | R-1 | M-A1 | HTM-1 | HTM-A | 96.5 | E-1 | 115 | A | A | A |
| Example 2 | A-2 | R-1 | M-A1 | HTM-1 | HTM-A | 96.5 | E-2 | 120 | A | A | A |
| Example 3 | A-3 | R-1 | M-A1 | HTM-1 | HTM-A | 96.5 | E-3 | 123 | A | A | A |
| Example 4 | A-4 | R-1 | M-A2 | HTM-2 | HTM-B | 97.0 | E-1 | 128 | A | A | A |
| Example 5 | A-5 | R-1 | M-A2 | HTM-2 | HTM-B | 97.0 | E-2 | 117 | A | A | A |
| Example 6 | A-6 | R-1 | M-A2 | HTM-2 | HTM-B | 97.0 | E-3 | 123 | A | A | A |
| Example 7 | A-7 | R-1 | M-A3 | HTM-3 | HTM-C | 96.8 | E-1 | 125 | A | A | A |
| Example 8 | A-8 | R-1 | M-A4 | HTM-4 | HTM-D | 97.2 | E-1 | 122 | A | A | A |
| Example 9 | A-9 | R-2 | M-A1 | HTM-1 | HTM-A | 96.5 | E-1 | 123 | A | A | A |
| Example 10 | A-10 | R-3 | M-A1 | HTM-1 | HTM-A | 96.5 | E-1 | 120 | A | A | A |
| Example 11 | A-11 | R-4 | M-A1 | HTM-1 | HTM-A | 96.5 | E-1 | 125 | A | A | A |
| Example 12 | A-12 | R-5 | M-A1 | HTM-1 | HTM-A | 96.5 | E-1 | 122 | A | A | A |
| Example 13 | A-13 | R-6 | M-A1 | HTM-1 | HTM-A | 96.5 | E-1 | 123 | A | A | A |
| Example 14 | A-14 | R-7 | M-A1 | HTM-1 | HTM-A | 96.5 | E-1 | 121 | A | A | A |

**[Table 6]**

| | Single-layer photosensitive member | Single-layer photosensitive layer | | | | | | VL | | Crack | Crystallization |
|---|---|---|---|---|---|---|---|---|---|---|---|
| | | Resin | HTM | | | | ETM | | | | |
| | | | Sample | HTM (1) | HTM (2) | HTM(1) percentage content [%] | | Value [+V] | Rating | | |
| Comparative Example 1 | B-1 | R-8 | M-A2 | HTM-2 | HTM-B | 97.0 | E-1 | 105 | A | C | A |
| Comparative Example 2 | B-2 | R-9 | M-A2 | HTM-2 | HTM-B | 97.0 | E-1 | 110 | A | C | A |
| Comparative Example 3 | B-3 | R-10 | M-A2 | HTM-2 | HTM-B | 97.0 | E-1 | 118 | A | B | A |
| Comparative Example 4 | B-4 | R-1 | M-B1 | HTM-1 | - | 100.0 | E-1 | 129 | A | B | A |
| Comparative Example 5 | B-5 | R-1 | M-B1 | HTM-1 | - | 100.0 | E-2 | 135 | B | B | A |
| Comparative Example 6 | B-6 | R-1 | M-B1 | HTM-1 | - | 100.0 | E-3 | 145 | C | B | A |
| Comparative Example 7 | B-7 | R-1 | M-B2 | HTM-2 | - | 100.0 | E-1 | 134 | B | B | A |
| Comparative Example 8 | B-8 | R-1 | M-B3 | HTM-3 | - | 100.0 | E-1 | 141 | C | B | B |
| Comparative Example 9 | B-9 | R-1 | M-B3 | HTM-3 | - | 100.0 | E-2 | 153 | C | B | B |
| Comparative Example 10 | B-10 | R-1 | M-B3 | HTM-3 | - | 100.0 | E-3 | 155 | C | B | B |
| Comparative Example 11 | B-11 | R-1 | M-B4 | HTM-3 | - | 100.0 | E-2 | 160 | C | B | B |
| Comparative Example 12 | B-12 | R-1 | M-B5 | - | HTM-A | 0.0 | E-1 | 380 | C | C | B |
| Comparative Example 13 | B-13 | R-1 | M-A1 | HTM-1 | HTM-A | 96.5 | E-4 | 134 | B | A | B |

**[Table 7]**

| | Single-layer photosensitive member | Single-layer photosensitive layer | | | | | | VL | | Crack | Crystallization |
|---|---|---|---|---|---|---|---|---|---|---|---|
| | | Resin | HTM | | | | ETM | | | | |
| | | | Sample | HTM (1) | HTM (2) | HTM(1) percentage content [%] | | Value [+V] | Rating | | |
| Comparative Example 14 | B-14 | R-11 | M-A2 | HTM-2 | HTM-B | 97.0 | E-1 | Application liquid preparation impossible | | | |
| Comparative Example 15 | B-15 | R-12 | M-A2 | HTM-2 | HTM-B | 97.0 | E-1 | 133 | B | A | B |
| Comparative Example 16 | B-16 | R-13 | M-A2 | HTM-2 | HTM-B | 97.0 | E-1 | Application liquid preparation impossible | | | |
| Comparative Example 17 | B-17 | R-14 | M-A2 | HTM-2 | HTM-B | 97.0 | E-1 | 131 | B | C | A |
| Comparative Example 18 | B-18 | R-15 | M-A2 | HTM-2 | HTM-B | 97.0 | E-1 | Application liquid preparation impossible | | | |
| Comparative Example 19 | B-19 | R-16 | M-A2 | HTM-2 | HTM-B | 97.0 | E-1 | 131 | B | C | A |
| Comparative Example 20 | B-20 | R-17 | M-A2 | HTM-2 | HTM-B | 97.0 | E-1 | 134 | B | C | A |
| Comparative Example 21 | B-21 | R-18 | M-A2 | HTM-2 | HTM-B | 97.0 | E-1 | 142 | C | A | B |
| Comparative Example 22 | B-22 | R-19 | M-A2 | HTM-2 | HTM-B | 97.0 | E-1 | 133 | B | A | B |
| Comparative Example 23 | B-23 | R-20 | M-A2 | HTM-2 | HTM-B | 97.0 | E-1 | Application liquid preparation impossible | | | |
| Comparative Example 24 | B-24 | R-21 | M-A2 | HTM-2 | HTM-B | 97.0 | E-1 | 131 | B | A | A |
| Comparative Example 25 | B-25 | R-22 | M-A2 | HTM-2 | HTM-B | 97.0 | E-1 | 120 | A | B | A |
| Comparative Example 26 | B-26 | R-23 | M-A2 | HTM-2 | HTM-B | 97.0 | E-1 | Application liquid preparation impossible | | | |

**[Table 8]**

| | Positively chargeable multi-layer photosensitive member | Charge transport layer | | Charge generating layer | | | | | | VL | | Crack | Crystallization |
|---|---|---|---|---|---|---|---|---|---|---|---|---|---|
| | | Resin | HTM | Resin | HTM | | | | ETM | | | | |
| | | | Sample | | Sample | HTM (1) | HTM (2) | HTM (1) percentage content [%] | | Value [+V] | Rating | | |
| Example 15 | C-1 | R-1 | M-A1 | R-1 | M-A1 | HTM-1 | HTM-A | 96.5 | E-1 | 114 | A | A | A |
| Example 16 | C-2 | R-1 | M-A1 | R-1 | M-A1 | HTM-1 | HTM-A | 96.5 | E-2 | 118 | A | A | A |
| Example 17 | C-3 | R-1 | M-A1 | R-1 | M-A1 | HTM-1 | HTM-A | 96.5 | E-3 | 124 | A | A | A |
| Example 18 | C-4 | R-1 | M-A1 | R-1 | M-A2 | HTM-2 | HTM-B | 97.0 | E-1 | 127 | A | A | A |
| Example 19 | C-5 | R-1 | M-A1 | R-1 | M-A2 | HTM-2 | HTM-B | 97.0 | E-2 | 116 | A | A | A |
| Example 20 | C-6 | R-1 | M-A1 | R-1 | M-A2 | HTM-2 | HTM-B | 97.0 | E-3 | 120 | A | A | A |
| Example 21 | C-7 | R-1 | M-A1 | R-1 | M-A3 | HTM-3 | HTM-C | 96.8 | E-1 | 124 | A | A | A |
| Example 22 | C-8 | R-1 | M-A1 | R-1 | M-A4 | HTM-4 | HTM-D | 97.2 | E-1 | 121 | A | A | A |
| Example 23 | C-9 | R-1 | M-A1 | R-2 | M-A1 | HTM-1 | HTM-A | 96.5 | E-1 | 124 | A | A | A |
| Example 24 | C-10 | R-1 | M-A1 | R-3 | M-A1 | HTM-1 | HTM-A | 96.5 | E-1 | 118 | A | A | A |
| Example 25 | C-11 | R-1 | M-A1 | R-4 | M-A1 | HTM-1 | HTM-A | 96.5 | E-1 | 124 | A | A | A |
| Example 26 | C-12 | R-1 | M-A1 | R-5 | M-A1 | HTM-1 | HTM-A | 96.5 | E-1 | 121 | A | A | A |
| Example 27 | C-13 | R-1 | M-A1 | R-6 | M-A1 | HTM-1 | HTM-A | 96.5 | E-1 | 120 | A | A | A |
| Example 28 | C-14 | R-1 | M-A1 | R-7 | M-A1 | HTM-1 | HTM-A | 96.5 | E-1 | 118 | A | A | A |

**[Table 9]**

| | Positively chargeable multi-layer photosensitive member | Charge transport layer | | Charge generating layer | | | | | | VL | | Crack | Crystallization |
|---|---|---|---|---|---|---|---|---|---|---|---|---|---|
| | | Resin | HTM | Resin | HTM | | | | ETM | | | | |
| | | | Sample | | Sample | HTM (1) | HTM (2) | HTM (1) percentage content [%] | | Value [+V] | Rating | | |
| Comparative Example 27 | D-1 | R-1 | M-A1 | R-8 | M-A2 | HTM-2 | HTM-B | 97.0 | E-1 | 101 | A | C | A |
| Comparative Example 28 | D-2 | R-1 | M-A1 | R-9 | M-A2 | HTM-2 | HTM-B | 97.0 | E-1 | 107 | A | C | A |
| Comparative Example 29 | D-3 | R-1 | M-A1 | R-10 | M-A2 | HTM-2 | HTM-B | 97.0 | E-1 | 113 | A | B | A |
| Comparative Example 30 | D-4 | R-1 | M-A1 | R-1 | M-B1 | HTM-1 | - | 100.0 | E-1 | 127 | A | B | A |
| Comparative Example 31 | D-5 | R-1 | M-A1 | R-1 | M-B1 | HTM-1 | - | 100.0 | E-2 | 133 | B | B | A |
| Comparative Example 32 | D-6 | R-1 | M-A1 | R-1 | M-B1 | HTM-1 | - | 100.0 | E-3 | 143 | C | B | A |
| Comparative Example 33 | D-7 | R-1 | M-A1 | R-1 | M-B2 | HTM-2 | - | 100.0 | E-1 | 132 | B | B | A |
| Comparative Example 34 | D-8 | R-1 | M-A1 | R-1 | M-B3 | HTM-3 | - | 100.0 | E-1 | 141 | C | B | B |
| Comparative Example 35 | D-9 | R-1 | M-A1 | R-1 | M-B3 | HTM-3 | - | 100.0 | E-2 | 150 | C | B | B |
| Comparative Example 36 | D-10 | R-1 | M-A1 | R-1 | M-B3 | HTM-3 | - | 100.0 | E-3 | 154 | C | B | B |
| Comparative Example 37 | D-11 | R-1 | M-A1 | R-1 | M-B4 | HTM-3 | - | 100.0 | E-2 | 162 | C | B | B |
| Comparative Example 38 | D-12 | R-1 | M-A1 | R-1 | M-B5 | - | HTM-A | 0.0 | E-1 | 398 | C | C | B |
| Comparative Example 39 | D-13 | R-1 | M-A1 | R-1 | M-A1 | HTM-1 | HTM-A | 96.5 | E-4 | 132 | B | A | B |

**[Table 10]**

| | Positively chargeable multi-layer photosensitive member | Charge transport layer | | Charge generating layer | | | | | | VL | | Crack | Crystallization |
|---|---|---|---|---|---|---|---|---|---|---|---|---|---|
| | | Resin | HTM | Resin | HTM | | | | ETM | | | | |
| | | | Sample | | Sample | HTM (1) | HTM (2) | HTM (1) percentage content [%] | | Value [+V] | Rating | | |
| Comparative Example 40 | D-14 | R-1 | M-A1 | R-11 | M-A2 | HTM-2 | HTM-B | 97.0 | E-1 | Application liquid preparation impossible | | | |
| Comparative Example 41 | D-15 | R-1 | M-A1 | R-12 | M-A2 | HTM-2 | HTM-B | 97.0 | E-1 | 132 | B | A | B |
| Comparative Example 42 | D-16 | R-1 | M-A1 | R-13 | M-A2 | HTM-2 | HTM-B | 97.0 | E-1 | Application liquid preparation impossible | | | |
| Comparative Example 43 | D-17 | R-1 | M-A1 | R-14 | M-A2 | HTM-2 | HTM-B | 97.0 | E-1 | 131 | B | C | A |
| Comparative Example 44 | D-18 | R-1 | M-A1 | R-15 | M-A2 | HTM-2 | HTM-B | 97.0 | E-1 | Application liquid preparation impossible | | | |
| Comparative Example 45 | D-19 | R-1 | M-A1 | R-16 | M-A2 | HTM-2 | HTM-B | 97.0 | E-1 | 132 | B | C | A |
| Comparative Example 46 | D-20 | R-1 | M-A1 | R-17 | M-A2 | HTM-2 | HTM-B | 97.0 | E-1 | 135 | B | C | A |
| Comparative Example 47 | D-21 | R-1 | M-A1 | R-18 | M-A2 | HTM-2 | HTM-B | 97.0 | E-1 | 143 | c | A | B |
| Comparative Example 48 | D-22 | R-1 | M-A1 | R-19 | M-A2 | HTM-2 | HTM-B | 97.0 | E-1 | 132 | B | A | B |
| Comparative Example 49 | D-23 | R-1 | M-A1 | R-20 | M-A2 | HTM-2 | HTM-B | 97.0 | E-1 | Application liquid preparation impossible | | | |
| Comparative Example 50 | D-24 | R-1 | M-A1 | R-21 | M-A2 | HTM-2 | HTM-B | 97.0 | E-1 | 132 | B | A | A |
| Comparative Example 51 | D-25 | R-1 | M-A1 | R-22 | M-A2 | HTM-2 | HTM-B | 97.0 | E-1 | 118 | A | B | A |
| Comparative Example 52 | D-26 | R-1 | M-A1 | R-23 | M-A2 | HTM-2 | HTM-B | 97.0 | E-1 | Application liquid preparation impossible | | | |

As can be understood from formulas (R-8) and (R-9), the resins (R-8) and (R-9) were not resins included in the polyarylate resins (PA). As can be understood from Table 4, the resins (R-10) to (R-23) were not resins included in the polyarylate resins (PA). Therefore, as shown in Tables 7 and 10, resins (R-11), (R-13), (R-15), (R-20), and (R-23) did not dissolve in the solvent used for preparing the application liquid for the first photosensitive layer formation, and the first photosensitive layer (specifically, any of the single-layer photosensitive layers and the charge generating layers) was not formed. In addition, as shown in Tables 6, 7, 9, and 10, the single-layer photosensitive members (B-1) to (B-3), (B-15), (B-17), (B-19) to (B-22), (B-24), and (B-25), as well as the positively chargeable multi-layer photosensitive members (D-1) to (D-3), (D-15), (D- 17), (D-19) to (D-22), (D-24), and(D-25) did not receive a rating of A in evaluation of at least one of sensitivity characteristics, crack resistance, or crystallization inhibition.

As shown in Tables 6 and 9, the first photosensitive layers of the single-layer photosensitive members (B-4) to (B-11) and the positively chargeable multi-layer photosensitive members (D-4) to (D-11) did not contain the second hole transport material. For this reason, the single-layer photosensitive members (B-4) to (B-11) and the positively chargeable multi-layer photosensitive members (D-4) to (D-11) did not receive a rating of A in evaluation of at least one of sensitivity characteristics, crack resistance, or crystallization inhibition.

As shown in Tables 6 and 9, the first photosensitive layers of the single-layer photosensitive member (B-12) and the positively chargeable multi-layer photosensitive member (D-12) did not contain the first hole transport material. Therefore, the single-layer photosensitive member (B-12) and the positively chargeable multilayer photosensitive member (D-12) were rated as C in sensitivity characteristics and crack resistance and as B in crystallization inhibition.

As shown in Tables 6 and 9, the first photosensitive layers of the single-layer photosensitive member (B-13) and the positively chargeable multi-layer photosensitive member (D-13) contained the electron transport material (E-4). However, the electron transport material (E-4) was not a compound encompassed by any of formulas (10), (11), and (12). Therefore, the single-layer photosensitive member (B-13) and the positively chargeable laminated photosensitive member (D-13) were rated as B in evaluations of sensitivity characteristics and crystallization inhibition.

By contrast, as can be understood from Table 3, resins (R-1) to (R-7) were resins encompassed by the polyarylate resin (PA). As can be understood from Tables 5 and 8, the single-layer photosensitive members (A-1) to (A-14) and the positively chargeable multi-layer photosensitive members (C-1) to (C-14) each have the following features. The first photosensitive layer contained a charge generating material, a binder resin, an electron transport material, a first hole transport material, and a second hole transport material. The binder resin included a polyarylate resin (PA) (specifically, resins (R-1) to (R-7)). The electron transport material included the electron transport material (10), (11), or (12) (specifically, any of the electron transport materials (E-1) to (E-3)). The first hole transport material included a first hole transport material (21) (specifically, any of the first hole transport materials (HTM-1) to (HTM-4)). The second hole transport material included a second hole transport material (22) (specifically, any of the second hole transport materials (HTM-A) to (HTM-D)). Therefore, the single-layer photosensitive members (A-1) to (A-14) and the positively chargeable multi-layer photosensitive members (C-1) to (C-14) were all rated as A in evaluations of sensitivity characteristics, crack resistance, and crystallization inhibition.

From the above, it was demonstrated that the photosensitive members of the present invention encompassing the single-layer photosensitive members (A-1) to (A-14) and the positively chargeable multi-layer photosensitive members (C-1) to (C-14) can have a favorably formed photosensitive layer, exhibit excellent sensitivity characteristics and crack resistance, and inhibit crystallization of the photosensitive layer. Furthermore, it is considered that the process cartridge and image forming apparatus of the present invention, which include such a photosensitive member, can form high-quality images with excellent sensitivity characteristics and can inhibit occurrence of image defects caused by cracks and crystallization of the photosensitive layer.

### INDUSTRIAL APPLICABILITY

The photosensitive member and process cartridge according to the present invention can be used in image forming apparatuses. The image forming apparatus according to the present invention can be used for image formation on recording media.

## Claims

1. An electrophotographic photosensitive member comprising:
a conductive substrate; and
at least one photosensitive layer, wherein
the at least one photosensitive layer includes a first photosensitive layer disposed on an outermost side of the at least one photosensitive layer,
the first photosensitive layer contains a charge generating material, a binder resin, an electron transport material, and a hole transport material,
the binder resin includes a polyarylate resin,
the polyarylate resin includes repeating units represented by formulas (1), (2), (3), and (4),
a third percentage content is greater than 0% and less than 50%, the third percentage content being a percentage content of a number of repeats of the repeating unit represented by the formula (3) to a total of a number of repeats of the repeating unit represented by the formula (1) and the number of repeats of the repeating unit represented by the formula (3),
a fourth percentage content is at least 35% and less than 70%, the fourth percentage content being a percentage content of a number of repeats of the repeating unit represented by the formula (4) to a total of a number of repeats of the repeating unit represented by the formula (2) and the number of repeats of the repeating unit represented by the formula (4),
the electron transport material includes a compound represented by formula (10), (11), or (12),
the hole transport material includes a first hole transport material and a second hole transport material,
the first hole transport material includes a compound represented by formula (21), and
the second hole transport material includes a compound represented by formula (22), 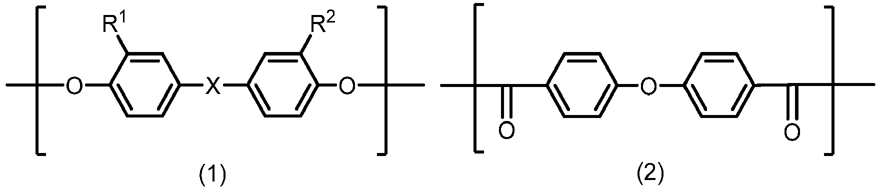 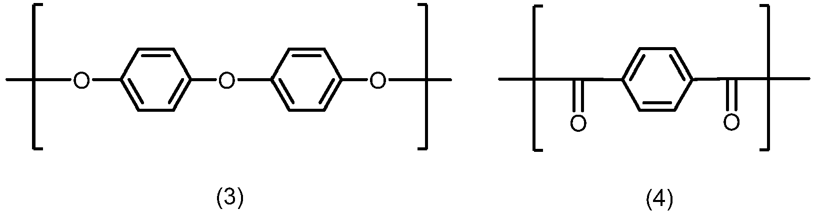
where in the formula (1),
R¹ and R² each represent a methyl group and X represents a divalent group represented by formula (X1), or
R¹ and R² each represent a hydrogen atom and X represents a divalent group represented by formula (X2), 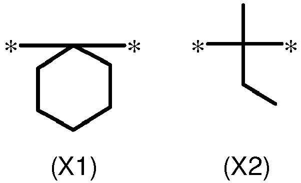
in the formulas (X1) and (X2), * represents a bond, 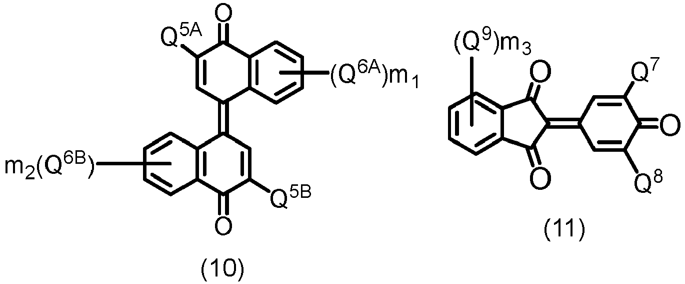 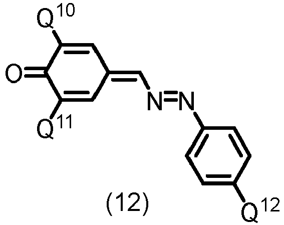
where in the formula (10), Q^{5A} and Q^{5B} each represent, independently of one another, a hydrogen atom, a phenyl group, an alkyl group with a carbon number of at least 1 and no greater than 8, or an alkoxy group with a carbon number of at least 1 and no greater than 8; Q^{6A} and Q^{6B} each represent, independently of one another, a phenyl group, an alkyl group with a carbon number of at least 1 and no greater than 8, or an alkoxy group with a carbon number of at least 1 and no greater than 8; and mi and m₂ each represent, independently of one another, an integer of at least 0 and no greater than 4,
in the formula (11), Q⁷ and Q⁸ each represent, independently of one another, a hydrogen atom, a phenyl group, an alkyl group with a carbon number of at least 1 and no greater than 8, or an alkoxy group with a carbon number of at least 1 and no greater than 8; Q⁹ represents a phenyl group, an alkyl group with a carbon number of at least 1 and no greater than 8, or an alkoxy group with a carbon number of at least 1 and no greater than 8; and m₃ represents an integer of at least 0 and no greater than 4,
in the formula (12), Q¹⁰ and Q¹¹ each represent, independently of one another, a hydrogen atom or an alkyl with a carbon number of at least 1 and no greater than 6; and Q¹² represents a halogen atom or a hydrogen atom, 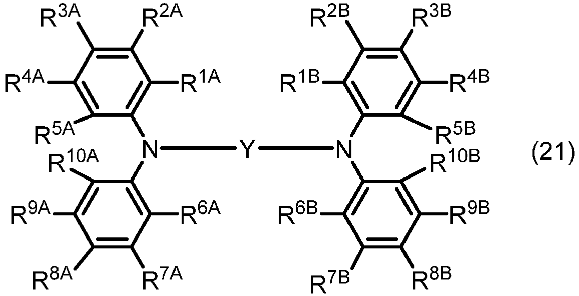 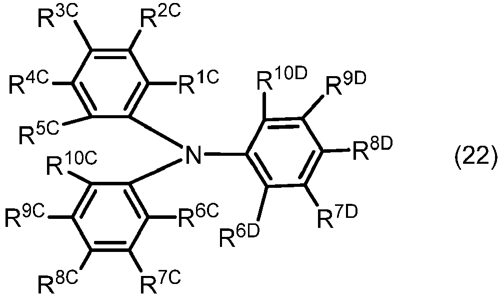
where in the formula (21), R^{1A}, R^{2A}, R^{3A}, R^{4A}, R^{5A}, R^{6A}, R^{7A}, R^{8A}, R^{9A}, and R^{10A} each represent, independently of one another, a hydrogen atom, an alkyl group with a carbon number of at least 1 and no greater than 8, an alkoxy group with a carbon number of at least 1 and no greater than 8, or an aryl group with a carbon number of at least 6 and no greater than 14,
R^{1B} in the formula (21) and R^{1C} in the formula (22) represent a same group as R^{1A} in the formula (21),
R^{2B} in the formula (21) and R^{2C} in the formula (22) represent a same group as R^{2A} in the formula (21),
R^{3B} in the formula (21) and R^{3C} in the formula (22) represent a same group as R^{3A} in the formula (21),
R^{4B} in the formula (21) and R^{4C} in the formula (22) represent a same group as R^{4A} in the formula (21),
R^{5B} in the formula (21) and R^{5C} in the formula (22) represent a same group as R^{5A} in the formula (21),
R^{6B} in the formula (21) and R^{6C} and R^{6D} in the formula (22) represent a same group as R^{6A} in the formula (21),
R^{7B} in the formula (21) and R^{7C} and R^{7D} in the formula (22) represent a same group as R^{7A} in the formula (21),
R^{8B} in the formula (21) and R^{8C} and R^{8D} in the formula (22) represent a same group as R^{8A} in the formula (21),
R^{9B} in the formula (21) and R^{9C} and R^{9D} in the formula (22) represent a same group as R^{9A} in the formula (21),
R^{10B} in the formula (21) and R^{10C} and R^{10D} in the formula (22) represent a same group as R^{10A} in the formula (21), and
Y in the formula (21) represents a divalent group represented by formula (Y2),

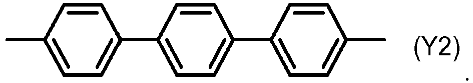

2. The electrophotographic photosensitive member according to claim 1, wherein in the formula (1), R¹ and R² each represent a methyl group and X represents a divalent group represented by the formula (X1).

3. The electrophotographic photosensitive member according to claim 1, wherein
in the formula (1), R¹ and R² each represent a methyl group and X represents a divalent group represented by the formula (X1), and
the fourth percentage content is at least 40% and less than 70%.

4. The electrophotographic photosensitive member according to claim 1, wherein
in the formula (1), R¹ and R² each represent a methyl group and X represents a divalent group represented by the formula (X1), and
the third percentage content is at least 30% and less than 50%.

5. The electrophotographic photosensitive member according to claim 1, wherein
in the formula (1), R¹ and R² each represent a methyl group and X represents a divalent group represented by the formula (X1), and
the polyarylate resin has an end group with a halogen atom.

6. The electrophotographic photosensitive member according to claim 1, wherein
in the formula (1), R¹ and R² each represent a hydrogen atom and X represents a divalent group represented by the formula (X2), and
the fourth percentage content is at least 35% and no greater than 45%.

7. The electrophotographic photosensitive member according to claim 1, wherein
a first percentage content is a percentage content of the number of repeats of the repeating unit represented by the formula (1) to the total of the number of repeats of the repeating unit represented by the formula (1) and the number of repeats of the repeating unit represented by the formula (3),
a second percentage content is a percentage content of the number of repeats of the repeating unit represented by the formula (2) to the total of the number of repeats of the repeating unit represented by the formula (2) and the number of repeats of the repeating unit represented by the formula (4),
a value of the first percentage content is different from those of the second percentage content and the fourth percentage content, and
a value of the third percentage content is different from those of the second percentage content and the fourth percentage content.

8. The electrophotographic photosensitive member according to claim 1, wherein the third percentage content is greater than 30% and less than 50%.

9. The electrophotographic photosensitive member according to claim 1, wherein the polyarylate resin does not include a repeating unit represented by formula (5):

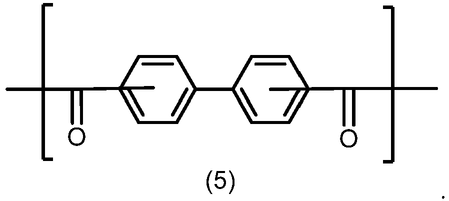

10. The electrophotographic photosensitive member according to claim 1, wherein
the compound represented by the formula (10) is a compound represented by formula (E-1),
the compound represented by the formula (11) is a compound represented by formula (E-2), and
the compound represented by the formula (12) is a compound represented by formula (E-3),

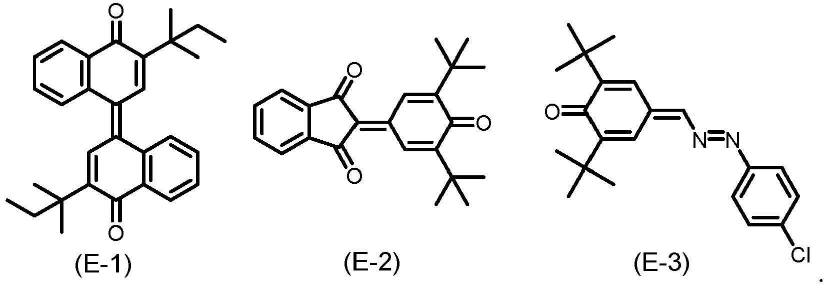

11. The electrophotographic photosensitive member according to claim 1, wherein
the compound represented by the formula (21) is a compound represented by formula (HTM-1) and the compound represented by the formula (22) is a compound represented by formula (HTM-A),
the compound represented by the formula (21) is a compound represented by formula (HTM-2) and the compound represented by the formula (22) is a compound represented by formula (HTM-B),
the compound represented by the formula (21) is a compound represented by formula (HTM-3) and the compound represented by the formula (22) is a compound represented by formula (HTM-C), or
the compound represented by the formula (21) is a compound represented by formula (HTM-4) and the compound represented by the formula (22) is a compound represented by formula (HTM-D),

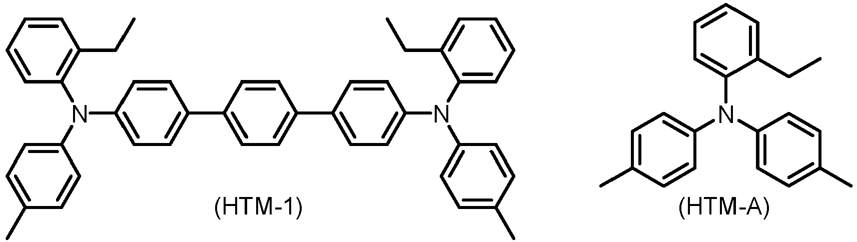

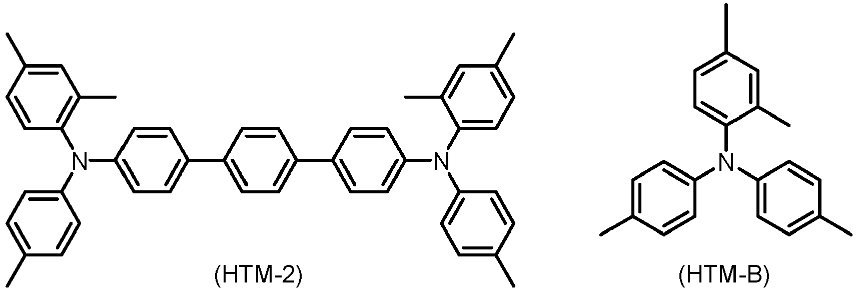

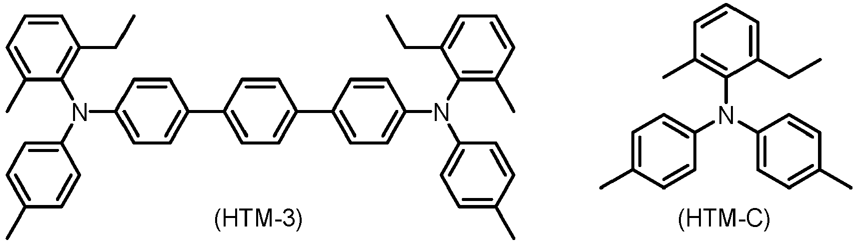

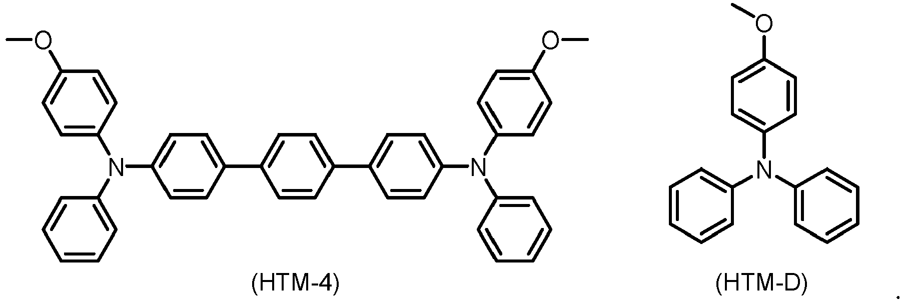

12. The electrophotographic photosensitive member according to claim 1, wherein
the photosensitive layer is a single layer, and
the photosensitive layer of the single layer is a single-layer photosensitive layer being the first photosensitive layer.

13. The electrophotographic photosensitive member according to claim 1, wherein
the photosensitive layer includes two layers, and
the photosensitive layer of the two layers includes a charge generating layer being the first photosensitive layer and a charge transport layer being a second photosensitive layer.

14. A process cartridge comprising:
at least one selected from the group consisting of a charger, a light exposure device, a development device, and a transfer device; and
the electrophotographic photosensitive member according to claim 1.

15. An image forming apparatus comprising:
an image bearing member;
a charger configured to charge a surface of the image bearing member to a positive polarity;
an exposure device configured to expose the charged surface of the image bearing member to light to form an electrostatic latent image on the surface of the image bearing member;
a development device configured to develop the electrostatic latent image into a toner image by supplying toner to the surface of the image bearing member; and
a transfer device configured to transfer the toner image from the image bearing member to a transfer target, wherein
the image bearing member is the electrophotographic photosensitive member according to claim 1.
